(19) Europäisches Patentamt
European Patent Office
Office européen des brevets

(11) EP 2 493 016 A2

(12) **EUROPEAN PATENT APPLICATION**

(43) Date of publication:
**29.08.2012 Bulletin 2012/35**

(51) Int Cl.:
***H01Q 7/04*** *(2006.01)* *H01Q 1/32* *(2006.01)*

(21) Application number: **11186749.5**

(22) Date of filing: **26.10.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **28.02.2011 JP 2011041943**
**28.02.2011 JP 2011041944**
**28.02.2011 JP 2011041945**
**28.02.2011 JP 2011041946**
**28.02.2011 JP 2011041947**

(71) Applicant: **Equos Research Co., Ltd.**
**Chiyoda-ku**
**Tokyo 101-0021 (JP)**

(72) Inventors:
- **Yamakawa, Hiroyuki**
**Chiyoda-ku, Tokyo 101-0021 (JP)**
- **Ito, Yasuo**
**Chiyoda-ku, Tokyo 101-0021 (JP)**
- **Sato, Kenichiro**
**Chiyoda-ku, Tokyo 101-0021 (JP)**
- **Shimokawa, Shigenori**
**Chiyoda-ku, Tokyo 101-0021 (JP)**

(74) Representative: **TBK**
**Bavariaring 4-6**
**80336 München (DE)**

(54) **Antenna**

(57) An antenna (201) includes: a case body (260) having a bottom plate portion (261), side plate portions (262) extending from the bottom plate portion (261), and an opening portion (263) surrounded by the side plate portions (262); a magnetic resonance antenna portion (270) placed in the case body (260); and a magnetic shield body (280) disposed on a side closer to the opening portion (263) than the magnetic resonance antenna portion (270).

FIG. 3

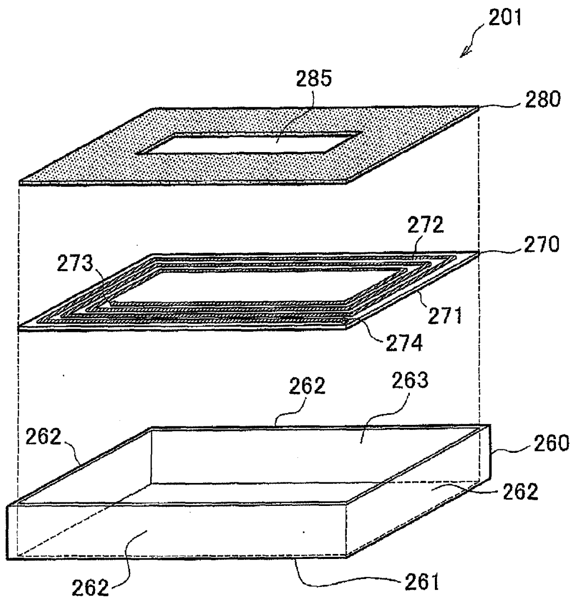


EP 2 493 016 A2

## Description

BACKGROUND OF THE INVENTION

1. Field of the Invention

The invention relates to an antenna that is used in a magnetic resonance-type, wireless electric power transmission system and used to transmit/receive electric power.

2. Description of Related Art

In recent years, the technology to wirelessly transmit electric power (electric energy) without using a power supply cable or the like has been actively developed. Among various types of methods of wirelessly transmitting electric power, there is a technology called magnetic resonance method, which has received widespread attention. The magnetic resonance method was proposed by a research group of Massachusetts Institute of Technology in 2007 and the related art is described in, for example, Published Japanese Translation of PCT Application No. 2009-501510 (JP-A-2009-501510).

In the magnetic resonance wireless power transmission system, the resonance frequency of a transmitting antenna and the resonance frequency of a receiving antenna are set equal to each other and antennas having high Q factors (equal to or greater than 100) are used, whereby energy is efficiently transmitted from the transmitting antenna to the receiving antenna. One of the advantages is that the distance, over which the electric power is transmitted, is several dozen centimeters to several meters.

Several proposals have been made concerning the specific configuration of the antenna used in the magnetic resonance wireless power transmission system as described above. For example, Japanese Patent Application Publication No. 2010-73976 (JP-A-2010-73976) describes the structure of a communication coil, used in a wireless power transmission system for wirelessly transmitting electric power from a power supply circuit to a power receiving circuit, that is provided for each of the power supply circuit and the power receiving circuit, wherein the communication coil includes a printed-circuit board made of a material having a relative dielectric constant equal to or greater than 1, a primary coil provided at a first layer of the printed circuit board and including an electrically conductive pattern with at least one loop, and a resonance coil provided at a second layer of the printed-circuit board and formed by a spiral electrically conductive pattern.

When the magnetic resonance power transmission system as described above is used to supply electric power to vehicles, such as pure electric vehicles (EV) and hybrid electric vehicles (HEV), it is conceivable that the transmitting antenna is buried in the ground and the receiving antenna is installed on the bottom portion of a vehicle. In the coil structure described in JP-A-2009-501510, however, optimization of the design for installation of the coil onto the bottom portion of a vehicle that is made of metal is not implemented and therefore, when the coil is used in a state where the coil is installed on the bottom of a vehicle, the electric power transmission efficiency is limited.

in addition, in an electric power transmission antenna used in a conventional electric power transmission system, the value of Q (quality factor) that is an important parameter for electric power transmission is not always high and the electric power transmission efficiency can be low.

SUMMARY OF THE INVENTION

A first aspect of the invention is an antenna including: a case body having a bottom plate portion, side plate portions extending from the bottom plate portion, and an opening portion surrounded by the side plate portions; a magnetic resonance antenna portion placed in the case body; and a magnetic shield body disposed on a side closer to the opening portion than the magnetic resonance antenna portion.

In the antenna of the above first aspect, a configuration may be employed, in which the side closer to the opening portion than the magnetic resonance antenna portion is an upper side with respect to the magnetic resonance antenna portion, and the antenna is configured to be attached to a vehicle bottom portion at the opening portion. In the antenna of the above first aspect, a configuration may be employed, in which the opening portion is disposed under the magnetic resonance antenna portion, and the side closer to the opening portion than the magnetic resonance antenna portion is a lower side with respect to the magnetic resonance antenna portion.

It is preferable that the antenna of the above first aspect further include a metallic body that covers the case body at an upper side of the case body.

A second aspect of the invention is an antenna including: a case body having a bottom plate portion and side plate portions extending from the bottom plate portion; a coil unit placed in the case body; a flat plate-shaped magnetic shield body that is disposed above the coil unit and has a hole portion; and a metallic body that covers the case body at an upper side of the case body.

A third aspect of the invention is an antenna including: a case body having a bottom plate portion, side plate portions extending from the bottom plate portion, and an upper opening portion surrounded by the side plate portions; a coil unit placed in the case body; and a magnetic shield body that is disposed above the coil unit and has a plurality of magnetic shield pieces.

It is preferable that the antenna of the above third aspect further include a metallic body that covers the case body at an upper side of the case body.

A fourth aspect of the invention is an antenna including: a case body having a bottom plate portion and side plate portions extending from the bottom plate portion; a magnetic resonance antenna portion placed in the case body; and a magnetic shield body that is disposed above the magnetic resonance antenna portion so as to be spaced apart from the magnetic resonance antenna portion by a first distance.

It is preferable that the antenna of the above fourth aspect further include a metallic body that is disposed above the magnetic shield body so as to be spaced apart from the magnetic shield body by a second distance.

It is preferable that, in the antenna of the above fourth aspect, the first distance be greater than the second distance.

It is preferable that, in the antennas of the above first to fourth aspects, the metallic body include a plurality of metallic pieces.

It is preferable that, in the antennas of the above first to fourth aspects, a plurality of heat dissipation members that are not brought into contact with each other be disposed on the side plate portions.

It is preferable that, in the antennas of the above first to fourth aspects, a Q factor be equal to or greater than 100.

A fifth aspect of the invention is an antenna including: a base that has a first surface and a second surface that is a back in relation to the first surface; a first surface electrically conductive portion that is formed on the first surface of the base and, two end of which are a first surface first end portion and a first surface second end portion; a second surface electrically conductive portion that is formed on the second surface of the base and, two end of which are a second surface first end portion and a second surface second end portion, wherein the second surface electrically conductive portion coincides with the first surface electrically conductive portion when viewed transparently from the first surface side in a direction of the second surface; a first through hole conducting portion that penetrates between the first surface and the second surface allows the first surface first end portion and the second surface first end portion to be electrically connected to each other; and a second through hole conducting portion that penetrates between the first surface and the second surface allows the first surface second end portion and the second surface second end portion to be electrically connected to each other.

A sixth aspect of the invention is an antenna including: a plurality of electrically conductive portions that are layered with a base interposed between the adjacent electrically conductive portions, each electrically conductive portion having a first end portion and a second end portion; a through hole conducting portion that penetrates the base and allows the first end portions of the electrically conductive portions to be electrically connected to each other; and a through hole conducting portion that penetrates the base and allows the second end portions of the electrically conductive portions to be electrically connected to each other, wherein all of the plurality of electrically conductive portions coincide with each other when viewed transparently along a layering direction.

When the magnetic shield body is disposed above the coil unit, even when the antenna is installed on the bottom of the vehicle, the influence of the metallic components of the vehicle body is suppressed and the Q factor of the antenna is kept high, which makes it possible to efficiently transmit electric power.

The Q factor of the antenna is measured using a measuring instrument, such as an impedance analyzer.

In addition, when the metallic body that covers the upper opening portion is provided, it is made possible to stably transmit electric power regardless of the type of the vehicle, on which the antenna is installed.

When the metallic body includes the plurality of metallic pieces, it is made possible to more efficiently transmit electric power.

When the plurality of heat dissipation members that are not brought into contact with each other are disposed, it is made possible to efficiently dissipate the heat generated by the coil unit and at the same time efficiently transmit electric power.

When the antenna is configured so that the first surface electrically conductive portion and the second surface electrically conductive portion formed so as to overlap the first surface electrically conductive portion are electrically connected via through holes at the two end portions, the transmission efficiency between antennas is improved because the resistance is reduced and the Q (quality factor) is improved without significantly reducing the inductance.

BRIEF DESCRIPTION OF THE DRAWINGS

Features, advantages, and technical and industrial significance of exemplary embodiments of the invention will be described below with reference to the accompanying drawings, in which like numerals denote like elements, and wherein:

FIG. 1 is a block diagram of an electric power transmission system, in which antennas according to embodiments of the invention are used;
FIG. 2 is a diagram showing an inverter section of the electric power transmission system;
FIG. 3 is an exploded perspective view of a receiving antenna 201 according to a first embodiment of the invention;
FIG. 4 is a schematic diagram of a section showing how electric power is transferred via the receiving antenna 201 according to the first embodiment of the invention;
FIG. 5 is a perspective view of a receiving antenna 201 according to a second embodiment of the invention;
FIGS. 6A and 6B are diagrams showing the results of measurement of the electric power transmission efficiency when metallic plates imitating a heat dissipation members 300 are disposed on a coil unit 270;
FIG. 7 is an exploded perspective view of a receiving antenna 201 according to a third embodiment of the invention;
FIG. 8 is a schematic diagram of a section showing how electric power is transferred via the receiving antenna 201 according to the third embodiment of the invention;
FIG. 9 is a graph showing the result of measurement of the relationship between the position of a magnetic shield body 280 and the transmission efficiency;
FIGS. 10A and 10B are diagrams for explaining the result of verification of the effects brought about by the magnetic shield body 280 having a hole portion 285;
FIG. 11 is an exploded perspective view of a receiving antenna 201 according to a fourth embodiment of the invention;
FIG 12 is a schematic diagram of a section showing how electric power is transferred via the receiving antenna 201 according to the fourth embodiment of the invention;
FIGS. 13A and 13B are diagrams for explaining the result of verification of the effects brought about by dividing a metallic body 290;
FIG. 14 is an exploded perspective view of a receiving antenna 201 according to a fifth embodiment of the invention;
FIG. 15 is a schematic diagram of a section showing how electric power is transferred via the receiving antenna 201 according to the fifth embodiment of the invention;
FIGS. 16A and 16B are diagrams for explaining the result of verification of the effects brought about by dividing the magnetic shield body 280;
FIG. 17 is an exploded perspective view of a receiving antenna 201 according to a sixth embodiment of the invention;
FIG. 18 is a schematic diagram of a section showing how electric power is transferred via the receiving antenna 201 according to the sixth embodiment of the invention;
FIG 19 is an exploded perspective view of a receiving antenna 201 according to a seventh embodiment of the invention;
FIG 20 is a schematic diagram of a section showing how electric power is transferred via the receiving antenna 201 according to the seventh embodiment of the invention;
FIGS. 21A and 21B are graphs showing variation in the transmission efficiency as the positional deviation of the antenna varies; and
FIG. 22 is an exploded perspective view of a receiving antenna 201 according to an eighth embodiment of the invention.

## DETAILED DESCRIPTION OF EMBODIMENTS

Embodiments of the invention will be described below with reference to the drawings. FIG. 1 is a block diagram of an electric power transmission system, in which antennas according to the embodiments of the invention are used. The antenna of the invention can be used as either a receiving antenna or a transmitting antenna, each of these antennas being a constituent element of the electric power transmission system. With regard to the following embodiments, examples, in which the antenna of the invention is used as a receiving antenna, are described.

A conceivable example of the electric power transmission system, in which the antennas of the invention are used, is a system for charging vehicles, such as pure electric vehicles (EV) and hybrid electric vehicles (HEV). In order to transmit electric power to a vehicle as described above in a non-contact manner, the electric power transmission system is installed in a parking space, in which the vehicle can be parked. The parking space, which serves as a vehicle charging space, is configured so that the transmitting antenna 105 is buried in the ground. A user of the vehicle parks the vehicle in the parking space, in which the electric power transmission system is installed, and makes the receiving antenna 201 that is mounted on the vehicle face the transmitting antenna 105 to cause the vehicle to receive electric power from the electric power transmission system. When the vehicle is parked in the parking space, the receiving antenna 201 mounted on the vehicle is caused to have a positional relationship with the transmitting antenna 105 such that the transmission efficiency is maximized.

In the electric power transmission system, in order to efficiently transmit electric power from the transmitting antenna 105 to the receiving antenna 201, the resonance frequency of the transmitting antenna 105 and the resonance frequency of the receiving antenna 201 are set equal to each other so that electric energy is efficiently transmitted from the transmitting antenna to the receiving antenna.

An alternating current-direct current (AC/DC) converter section 101 in the electric power-transmitting-side system 100 is a converter that converts the received commercial power supply to a certain direct current. The output from the AC/DC converter section 101 is, in some cases, boosted to a predetermined voltage in a high voltage generator section 102. The setting of the voltage generated in the high voltage generator section 102 can be controlled by a main control section 110.

An inverter section 103 generates a predetermined alternating current (AC) voltage from the high voltage supplied from the high voltage generator section 102 and supplies the AC voltage to the matching unit 104. FIG. 2 is a diagram showing the inverter section of the electric power transmission system. The inverter section 103 includes four field-effect transistors (FETs), which are $Q_A$ to $Q_D$ and are full-bridge connected as shown in FIG. 2, for example.

In this embodiment, the matching unit 104 is connected between a node T1 between the switching element $Q_A$ and the switching element $Q_B$ that are connected in series and a node T2 between the switching element $Q_C$ and the switching element $Q_D$ that are connected in series. When the switching element $Q_A$ and the switching element $Q_D$ are in an on state, the switching element $Q_B$ and the switching element $Q_C$ are caused to be in an off state, and, when the switching element $Q_B$ and the switching element $Q_C$ are in an on state, the switching element $Q_A$ and the switching element $Q_D$ are caused to ' ' be in an off state, whereby rectangular wave AC voltage is generated between the node T1 and node T2. In the embodiments, the range of the frequency of the rectangular wave generated by switching the switching elements is generally from several hundred kilohertz to several thousand kilohertz.

The drive signals for driving the switching elements $Q_A$ to $Q_D$ included in the inverter section 103 as described above are received from the main control section 110. The system is configured so that the main control section 110 can control the frequency, at which the inverter section 103 is driven.

The matching unit 104 includes passive elements having a predetermined circuit constant and receives the output from the inverter section 103. The output from the matching unit 104 is supplied to the transmitting antenna 105. The system is configured so that the circuit constant of the passive elements included in the matching unit 104 is adjusted according to the commands received from the main control section 110. The main control section 110 sends commands to the matching unit 104 so that the transmitting antenna 105 and the receiving antenna 201 resonate with each other.

The transmitting antenna 105 includes a coil having an inductive reactance component and resonates with the receiving antenna 201 mounted on the vehicle that is positioned so as to face the transmitting antenna 105, whereby the electric energy output from the transmitting antenna 105 is sent to the receiving antenna 201.

The main control section 110 of the electric power-transmitting-side system 100 is a general-purpose information processing section including a central processing unit (CPU), a read only memory (ROM) that stores programs executed by the CPU, a random access memory (RAM) that provides a work area of the CPU, etc. The main control section 110 operates in cooperation with the illustrated components that are connected to the main control section 110.

A communication section 120 is configured to wirelessly communicate with a vehicle-side communication section 220 to enable exchange of data between the communication section 120 and the vehicle. The data received by the communication section 120 is transferred to the main control section 110 and the main control section 110 is configured to be able to transmit predetermined information to the vehicle via the communication section 120.

Next, the components provided on the vehicle side will be described. In the electric power receiving system in the vehicle, the receiving antenna 201 resonates with the transmitting antenna 105 to receive the electric energy output from the transmitting antenna 105. Such a receiving antenna 201 is configured to be able to be installed on a bottom portion of the vehicle.

The AC power received by the receiving antenna 201 is rectified by a rectifier section 202 and the rectified electric power is charged to a battery 204 via a charging control section 203. The charging control section 203 controls charging of the battery 204 according to the commands received from the main control section 210. The charging control section 203 is configured to be able to manage the amount of electric power remaining in the battery 204.

The main control section 210 is a general-purpose information processing section including a CPU, a ROM that stores programs executed by the CPU, a RAM that provides a work area, etc. The main control section 210 operates in cooperation with the illustrated components that are connected to the main control section 210.

An interface section 230, including a display device, buttons, a touch panel, speakers, etc., is installed at a driver's seat portion in the vehicle, provides predetermined information, etc. to a user (driver), and receives operations or inputs from the user. When the user performs a predetermined operation, the interface section 230 sends the operation data to the main control section 210 and the operation data is processed therein. When the predetermined information is provided to the user, the main control section 210 sends, to the interface section 230, display command data for displaying the predetermined information.

The vehicle-side communication section 220 is configured to wirelessly communicate with the electric power-transmitting-side communication section 120 to enable exchange of data between the communication section 220 and the transmitting system. The data received by the communication section 220 is transferred to the main control section 210. The main control section 210 is configured to be able to transmit predetermined information to the electric power-transmitting-side system via the communication section 220.

The user intending to receive the electric power via the electric power transmission system parks the vehicle in the parking space provided with the electric power-transmitting-side system as described above, and performs an input operation to execute charging via the interface section 230. In response to this, the main control section 210 acquires the amount of electric power remaining in the battery 204 from the charging control section 203 and calculates the amount of electric power required to charge the battery 204. The information concerning the amount of electric power calculated and the request to transmit electric power is sent from the vehicle-side communication section 220 to the communication section 120 of the electric power-transmitting-side system. The main control section 110 of the electric power-transmitting-side system that has received the information controls the high voltage generator section 102, the inverter section 103, and the matching unit 104 to transmit electric power to the vehicle.

Next, a specific configuration of the antenna used in the electric power transmission system configured as described above will described. Although an example, in which the configuration according to the invention is applied to the receiving antenna 201, will be described below, the antenna according to the invention can also be applied to the transmitting antenna 105.

FIG. 3 is an exploded perspective view of the receiving antenna 201 according to a first embodiment of the invention. FIG. 4 is a schematic diagram of a section showing how electric power is transferred via the receiving antenna 201 according to the first embodiment of the invention. The arrows in FIG. 4 schematically show the magnetic lines of force. Note that although a rectangular flat plate-shaped one is taken as an example of a coil unit 270 in the following description of the embodiments, the coil of the antenna of the invention is not limited to the coil having such a shape. A circular flat plate-shaped one may be used as the coil unit 270. Such a coil unit 270 functions as a magnetic resonance antenna portion in the receiving antenna 201. The "magnetic resonance antenna portion" includes not only the inductance component of the coil unit 270 but also a capacitance component of the stray capacitance of the coil unit 270 and/or the capacitance of the capacitor artificially added. The limitation of the invention, described in the form of the coil unit 270 in the specification, is in some cases expressed by the "magnetic resonance antenna portion" including the capacitance component as described above, in the claims.

A case body 260 is used to accommodate the coil unit 270 of the receiving antenna 201 having the inductive reactance component. The case body 260 is made of resin, such as polycarbonate, for example, and has a box shape having an opening. A side plate portion 262 is provided so as to extend from each side of a rectangular bottom plate portion 261 of the case body 260 perpendicularly to the bottom plate portion 261. An upper opening portion 263 surrounded by the side plate portions 262 is formed at the upper side of the case body 260. The case body 260, in which the receiving antenna 201 is installed, is fixed to a vehicle body on the upper opening portion 263 side. Installation of the case body 260 on the vehicle body may be performed by a well-known method. Note that a flange member or the like may be provided around the upper opening portion 263 so as to increase the ease of installation onto the vehicle body.

The coil unit 270 includes a rectangular flat plate-shaped glass epoxy base 271 and a spiral, electrically conductive portion 272 formed on the base 271. Conductive wires (not shown) are electrically connected to a first end portion 273 positioned on the radially inner side of the spiral, electrically conductive portion 272, and a second end portion 274 positioned on the radially outer side thereof. Thus, the electric power received by the receiving antenna 201 is conducted to the rectifier section 202. Such a coil unit 270 is placed on the rectangular bottom plate portion 261 of the case body 260 and is fixed to the bottom plate portion 261 by suitable fixing means.

A magnetic shield body 280 is a flat plate-shaped magnetic member having a hole portion 285. The magnetic shield body 280 is preferably made of a material with a high resistivity, a high permeability, and a small magnetic hysteresis, and a magnetic material, such as ferrite, can be used, for example. The magnetic shield body 280 is fixed to the case body 260 by suitable fixing means so that the magnetic shield body 280 is disposed to form a space above the coil unit 270. Such a layout increases the proportion of the magnetic lines of force generated by the transmitting antenna 105 that pass through the magnetic shield body 280, so that the influence of the metallic components of the vehicle body on the magnetic lines of force exerted when electric power is transmitted from the transmitting antenna 105 to the receiving antenna 201, is reduced.

The Q factor of the receiving antenna 201 configured as described above was equal to or higher than 100. The Q factor of the antenna was measured using a measuring instrument, such as an impedance analyzer.

As described above, according to the receiving antenna 201 of the first embodiment, the magnetic shield body 280 is disposed above the coil unit 270, so that, even when the receiving antenna 201 is installed on the bottom of the vehicle, the influence of the metallic components of the vehicle body is suppressed, which makes it possible to efficiently transmit electric power.

The structure of the receiving antenna 201 as described above can be applied to the transmitting antenna included in the electric power-transmitting-side system 100. In this case, as shown in FIG. 4, the transmitting antenna is configured so that the transmitting antenna and the receiving antenna 201 are symmetric (mirror symmetric) with respect to a horizontal plane.

Specifically, when the structure as described above is applied to the transmitting antenna 105, the structure of the transmitting antenna 105 is such that the transmitting antenna 105 includes: a case body 260 having a bottom plate portion 261, side plate portions 262 extending from the bottom plate portion 261, and an opening portion 263 surrounded by the side plate portions 262; a coil unit 270 placed in the case body 260; and a magnetic shield body 280 disposed under the coil unit 270, and the opening portion 263 is disposed under the coil unit 270.

Next, another embodiment of the invention will be described. FIG. 5 is a perspective view of a receiving antenna 201 according to a second embodiment of the invention. The second embodiment differs from the first embodiment in that heat dissipation members 300 for cooling the antenna by dissipating the heat generated by the coil unit 270 of the receiving antenna 201 of the first embodiment are added. The heat dissipation members 300 described in the description of the second embodiment can also be applied to the antennas according to the third and following embodiments described below for dissipation of heat from the antenna.

The heat dissipation member 300 is made of metal, such as copper, that has a high heat conductivity and includes an attachment plate portion 301 that is an attachment portion to be attached to the subject, from which heat is dissipated, and fin portions 302 that are provided so as to stand on the attachment plate portion 301 and have a function of providing a large contact area with air to dissipate the heat in the attachment plate portion 301 into the air. The heat dissipation member 300 is not limited to one as described above and a member having another shape may be used.

The heat dissipation member 300 is attached to the side plate portion 262 of the case body 260 of the receiving antenna 201 by fixing means, such as bolts and nuts (not shown). In the antenna according to the second embodiment, a plurality of the heat dissipation members 300 are provided on the side plate portions 262 of the case body 260 so as not to be brought into contact with each other. Specifically, for example, the plurality of heat dissipation members 300 provided on one side plate portion 262 are attached to the side plate portion 262 so as to be spaced apart at predetermined intervals as indicated by g in FIG. 5, for example.

In view of heat dissipation from the receiving antenna 201 only, it is preferable that the heat dissipation members 300 be arranged without the interval g on the side plate portions 262 of the case body 260. However, in the receiving antenna 201 of the second embodiment, the plurality of heat dissipation members 300 are intentionally arranged so as not to be brought into contact with each other so that the level of the electric power transmission efficiency of the antenna is kept high.

FIGS. 6A and 6B are diagrams showing the results of measurement of the electric power transmission efficiency when metallic plates imitating the heat dissipation members 300 are disposed on the coil unit 270. FIG. 6A is a graph showing the results of measurement. FIG. 6B is a diagram showing the preconditions when the measurement is performed. The preconditions of the measurement are as follows: (1) the measurement of the electric power transmission efficiency was conducted when metallic plates (P, Q) were disposed at opposing two sides of a rectangular flat plate-shaped coil unit 270; (2) the measurement of the electric power transmission efficiency was conducted when metallic plates (P, Q, R) were disposed at three sides of a rectangular flat plate-shaped coil unit 270; (3) the measurement of the electric power transmission efficiency was conducted when metallic plates (P, Q, R, S) were disposed at all sides of a rectangular flat plate-shaped coil unit 270.

According to FIG. 6A showing the results of measurement conducted under the preconditions as described above, in any of the case where the metallic plates were disposed at two sides of the coil unit 270 and the case where the metallic plates were disposed at three sides of the coil unit 270, there is no significant difference in the electric power transmission efficiency, whereas the electric power transmission efficiency is significantly reduced when the metallic plates were disposed at all sides of the coil unit 270 without any intervals. In the antenna of the second embodiment, in consideration of such knowledge, the plurality of heat dissipation members 300 are provided on the side plate portions 262 of the case body 260 so as not to be brought into contact with each other.

Note that in the above case (3), in which the rectangular flat plate-shaped coil unit 270 is surrounded by the metallic plates forming a loop, it is conceivable that the eddy current occurs in the loop, which increases the loss and reduces the transmission efficiency.

As described above, with the antenna according to the second embodiment, the plurality of heat dissipation members 300 that are not brought into contact with each other are disposed, so that it is made possible to efficiently dissipate the heat generated by the coil unit 270 and at the same time efficiently transmit electric power.

Next, a third embodiment of the invention will be described. FIG. 7 is an exploded perspective view of a receiving antenna 201 according to the third embodiment of the invention. FIG. 8 is a schematic diagram of a section showing how electric power is transferred via the receiving antenna 201 according to the third embodiment of the invention.

Also in the case of the third embodiment, the case body 260 is used to accommodate the coil unit 270 of the receiving antenna 201 having the inductive reactance component. The case body 260 is made of resin, such as polycarbonate, for example, and has a box shape having an opening. A side plate portion 262 is provided so as to extend from each side of a rectangular bottom plate portion 261 of the case body 260 perpendicularly to the bottom plate portion 261. An upper opening portion 263 surrounded by the side plate portions 262 is formed at the upper side of the case body 260.

Also in the case of the third embodiment, the coil unit 270 includes a rectangular flat plate-shaped glass epoxy base 271 and a spiral, electrically conductive portion 272 formed on the base 271. Conductive, wires (not shown) are electrically connected to a first end portion 273 positioned on the radially inner side of the spiral, electrically conductive portion 272, and a second end portion 274 positioned on the radially outer side thereof. Thus, the electric power received by the receiving antenna 201 is conducted to the rectifier section 202. Such a coil unit 270 is placed on the rectangular bottom plate portion 261 of the case body 260 and is fixed to the bottom plate portion 261 by suitable fixing means.

A magnetic shield body 280 is a flat plate-shaped magnetic member having a hole portion 285. A magnetic material, such as ferrite, can be used to make the magnetic shield body 280. The magnetic shield body 280 is fixed to the case body 260 by suitable means so that the magnetic shield body 280 is disposed above the coil unit 270 so as to be spaced apart from the coil unit 270 by a first distance ($d_1$). Such a layout increases the proportion of the magnetic lines of force generated by the transmitting antenna 105 that pass through the magnetic shield body 280, so that the influence of the metallic components of the vehicle body on the magnetic lines of force exerted when electric power is transmitted from the transmitting antenna 105 to the receiving antenna 201, is reduced.

At the upper opening portion 263 of the case body 260, a rectangular flat plate-shaped metallic body 290 that covers the upper opening portion 263 is disposed above the shield body 280 so as to be spaced apart from the shield body 280 by a second distance ($d_2$). Any material may be used as the metallic material used for such a metallic body 290 and in this embodiment, aluminum is used, for example.

In this embodiment, the metallic body 290 is disposed so as to cover the upper opening portion 263, so that the influence of the metallic components of the vehicle body on the coil unit 270 is suppressed and it is made possible to fix the antenna characteristics of the receiving antenna 201. According to this embodiment, since the antenna characteristics are fixed, similar electric power transmission characteristics are expected regardless of the type of the vehicle, to which the receiving antenna 201 is attached, which increases the multiplicity of uses as an antenna.

In addition, in this embodiment, the receiving antenna 201 is attached to the vehicle body via the metallic body 290 that covers the upper opening portion 263 and attaching the antenna to the vehicle via the metallic body 290 in this way makes it possible to secure a high strength of attachment to the vehicle. Fixation of the metallic body 290 to the vehicle body may be performed by a well-known method as appropriate. Note that a flange member or the like may be provided around the upper opening portion 263 so as to increase the ease of installation onto the vehicle body.

Verification of the effects brought about by disposing the magnetic shield body 280 above the coil unit 270 so as to be spaced apart from the coil unit 270 by the first distance ($d_1$) will be described below. FIG. 9 is a graph showing the result of measurement of the relationship between the position of the magnetic shield body 280 and the transmission efficiency. The graph of FIG. 9 shows the result of measurement of the transmission efficiency when, in FIG. 8, the magnetic shield 280 is moved in the vertical direction, with the coil unit 170 of the transmitting antenna 105 and the coil unit 270 and the metallic body 290 of the receiving antenna 201 fixed. Specifically, the distance G between the coil unit 170 of the transmitting antenna 105 and the coil unit 270 of the receiving antenna 201 is constant and equal to 20 cm, and the distance D between the coil unit 270 and the metallic body 290 is constant and equal to 6 cm.

The position of the magnetic shield body 280 is defined by the distance $d_1$ from the upper surface of the coil unit 270. The second distance $d_2$ between the magnetic shield body 280 and the metallic body 290 and the first distance have the following relation: $d_2 = D - d_1$. Two kinds of magnetic shield bodies 280 that are made of a magnetic material A and a magnetic material B, respectively, were used.

According to FIG. 9, the transmission efficiency is the highest when the distance $d_1$ is equal to approximately 0.9 cm in the case of the magnetic material A and the transmission efficiency is the highest when the distance $d_1$ is equal to approximately 5 cm in the case of the magnetic material B. It can be seen that in order to achieve the highest transmission efficiency, it is preferable that the magnetic shield body 280 be disposed above the coil unit 270 so as to be spaced apart from the coil unit 270 by the first distance ($d_1$) and the metallic body 290 be disposed above the magnetic shield body 280 so as to be spaced apart from the magnetic shield body 280 by the second distance.

As described above, in the receiving antenna 201 according to the third embodiment, the magnetic shield body 280 is disposed above the coil unit 270 so as to be spaced apart from the coil unit 270 by the first distance ($d_1$), so that, even when the receiving antenna 201 is installed on the bottom of the vehicle, the influence of the metallic components of the vehicle body is suppressed, which makes it possible to efficiently transmit electric power.

In addition, in the receiving antenna 201 according to the third embodiment, the metallic body 290 that covers the upper opening portion 263 is disposed above the magnetic shield body 280 so as to be spaced apart from the magnetic shield body 280 by the second distance ($d_2$), so that it is made possible to efficiently and stably transmit electric power regardless of the type of the vehicle, on which the receiving antenna 201 is installed.

In the antenna according to the third embodiment, it is preferable that a hole portion 285 be formed in the flat plate-shaped magnetic shield body 280 disposed above the coil unit 270. When the hole portion 285 is formed in the magnetic shield body 280, loss in the magnetic shield body 280 itself is reduced and it is made possible to maximize the shielding effect of the magnetic shield body 280. In addition, in the case of the magnetic shield body 280 having the hole portion 285, the area of the member is small and it is made possible to reduce costs of the antenna. It is preferable that the area of the hole portion 285 be such that the overlap between magnetic shield body 280 and the electrically conducive portion 272 of the coil unit 270 when viewed along the layering direction is not reduced.

The result of verification as described above will be described below. FIGS. 10A and 10B are diagrams for explaining the result of verification of the effects brought about by the magnetic shield body 280 having the hole portion 285. FIG. 10A is a diagram showing the results of measurement of the transmission efficiency and FIG. 10B is a diagram showing the preconditions when the measurement is performed. The preconditions of the measurement are as follows: (1) the measurement of the electric power transmission efficiency was conducted when a magnetic shield body without the hole portion 285 is used; (2) the measurement of the electric power transmission efficiency was conducted when a magnetic shield body 280 having the hole portion 285 is used. In each of the cases, the transmission efficiency was measured using the antenna of the layout shown in FIG. 8.

As can be seen from FIG. 10A, the transmission efficiency in the case of the antenna, in which the magnetic shield body 280 having the hole portion 285 is higher than that in the case of the antenna, in which the magnetic shield body without the hole portion 285.

In the receiving antenna 201 according to the third embodiment as described above, the flat plate-shaped magnetic shield body 280 having the hole portion 285 and the metallic body 290 that covers the upper opening portion 263 are disposed above the coil unit 270, so that, even when the receiving antenna 201 is installed on the bottom of the vehicle, the influence of the metallic components of the vehicle body is suppressed, which makes it possible to efficiently transmit electric power.

Next, another embodiment of the invention will be described. FIG. 11 is an exploded perspective view of a receiving antenna 201 according to a fourth embodiment of the invention. FIG. 12 is a schematic diagram of a section showing how electric power is transferred via the receiving antenna 201 according to the fourth embodiment of the invention.

The antenna according to the fourth embodiment differs from the antenna according to the third embodiment in that the metallic body 290 includes a plurality of metallic pieces 292. In the receiving antenna 201 according to the third embodiment, one plate-shaped metallic body 290 is used, whereas in the receiving antenna. 201 according to the fourth embodiment, one, in which the metallic pieces 292 are arrayed in a matrix arrangement of 3x4, is used as the metallic body 290. The metallic pieces 292 are arrayed on a metallic body support plate 291 made of polycarbonate, for example, at predetermined intervals and fixed to the metallic body support plate 291. In this embodiment, the metallic body 290 including the plurality of metallic pieces 292 arranged on the metallic body support plate 291 is configured to close the upper opening portion 263 of the case body 260. Any material may be used as the metallic material used for such metallic pieces 292 and in this embodiment, aluminum is used, for example.

FIGS. 13A and 13B are diagrams for explaining the result of verification of the effects brought about by dividing the metallic body 290. FIG. 13A is a graph showing the results of measurement. FIG. 13B is diagrams showing the preconditions when the measurement is performed. The preconditions of the measurement are as follows: (1) the metallic body 290 includes eight metallic pieces 292 and the measurement of the electric power transmission efficiency was conducted while the frequency was varied; (2) the metallic body 290 includes four metallic pieces 292 and the measurement of the electric power transmission efficiency was conducted while the frequency was varied; (3) the metallic body 290 includes two metallic pieces 292 and the measurement of the electric power transmission efficiency was conducted while the frequency was varied; (4) the metallic body 290 is a metallic plate and the measurement of the electric power transmission efficiency was conducted while the frequency was varied.

As can be seen from the graph showing the results shown in FIG. 13A, the greater the number of metallic pieces 292 included in the metallic body 290 is, the higher the peak of the transmission efficiency is.

In the receiving antenna 201 according to the fourth embodiment as described above, the metallic body 290 includes the plurality of metallic pieces 292, so that it is made possible to more efficiently transmit electric power.

The embodiment, in which the metallic body 290 includes the plurality of metallic pieces 292 can be applied to other embodiments, in which the metallic body 290 is used.

Next, another embodiment of the invention will be described. FIG. 14 is an exploded perspective view of a receiving antenna 201 according to a fifth embodiment of the invention. FIG. 15 is a schematic diagram of a section showing how electric power is transferred via the receiving antenna 201 according to the fifth embodiment of the invention.

The antenna according to the fifth embodiment differs from the antenna according to the third embodiment in that the magnetic shield body 280 includes a plurality of magnetic shield pieces 282. In the receiving antenna 201 according to the third embodiment, one plate-shaped magnetic shield body 280 is used, whereas in the receiving antenna 201 according to the fifth embodiment, one, in which ten magnetic shield pieces 282 are annularly arrayed so as to form a hole portion 285, is used as the magnetic shield body 280. The magnetic shield pieces 282 are arrayed on a magnetic shield body support plate 281 made of polycarbonate, for example, at predetermined intervals and fixed to the magnetic shield body support plate 281. In this embodiment, the magnetic shield body 280 including the plurality of magnetic shield pieces 282 arranged on the magnetic shield body support plate 281 is disposed above the coil unit 270 so as to be spaced apart from the coil unit 270 by a predetermined distance. A magnetic material, such as ferrite, can be used to make the magnetic shield pieces 282. Also in this embodiment, the magnetic shield body 280 has the hole portion 285.

FIGS. 16A and 16B are diagrams for explaining the result of verification of the effects brought about by dividing the magnetic shield body 280. FIG 16A is a graph showing the results of measurement. FIG. 16B is a diagram showing the preconditions when the measurement is performed. The preconditions of the measurement are as follows: (1) the measurement of the electric power transmission efficiency was conducted when the magnetic shield body 280 is a magnetic shield plate; (2) the measurement of the electric power transmission efficiency was conducted when the magnetic shield body 280 includes eight magnetic shield pieces 282 as shown in FIG. 16B; (3) the measurement of the electric power transmission efficiency was conducted when the magnetic shield body 280 includes twenty-eight magnetic shield pieces 282 as shown in FIG. 16B; (4) the measurement of the electric power transmission efficiency was conducted when the magnetic shield body 280 includes forty magnetic shield pieces 282 as shown in FIG. 16B.

As can be seen from the graph showing the results shown in FIG. 16A, the greater the number of magnetic shield pieces 282 included in the magnetic shield body 280 is, the more the transmission efficiency is improved. It is conceivable that this is because the loss due to the eddy current that occurs in the magnetic shield body 280 is reduced as the number of magnetic shield pieces 282 increases. Meanwhile, it can also be seen from FIG. 16A that the transmission efficiency levels off at a certain level as the number of magnetic shield pieces 282 included in the magnetic shield body 280 is increased.

When the number of magnetic shield pieces 282 included in the magnetic shield body 280 is increased, the manufacturing workload etc. also increases. In addition, even when the number is increased, the transmission efficiency levels off. Thus, it can be understood that it is preferable that the number of magnetic shield pieces 282 included in the magnetic shield body 280 be appropriately limited. For example, as shown in FIG. 14, a magnetic shield body 280 configured to include ten or so magnetic shield pieces 282 is a preferable embodiment.

In the receiving antenna 201 according to the fifth embodiment as described above, the magnetic shield body 280 including the plurality of magnetic shield pieces 282 and the metallic body 290 are disposed above the coil unit 270, so that, even when the receiving antenna 201 is installed on the bottom of the vehicle, the influence of the metallic components of the vehicle body is suppressed, which makes it possible to efficiently transmit electric power.

The embodiment, in which the magnetic shield body 280 includes the plurality of magnetic shield pieces 282, can be applied to other embodiments, in which the magnetic shield body 280 is used.

Next, another embodiment of the invention will be described. FIG. 17 is an exploded perspective view of a receiving antenna 201 according to a sixth embodiment of the invention. FIG. 18 is a schematic diagram of a section showing how electric power is transferred via the receiving antenna 201 according to the sixth embodiment of the invention.

The receiving antenna 201 according to the sixth embodiment is characterized in that the metallic body 290 includes a plurality of metallic pieces 292 as in the case of the receiving antenna 201 according to the fourth embodiment and the magnetic shield body 280 includes a plurality of magnetic shield pieces 282 as in the case of the receiving antenna 201 according to the fifth embodiment.

With the receiving antenna 201 according to the sixth embodiment as described above, it can be expected that it is possible to provide the receiving antenna 201 with the highest transmission efficiency among the embodiments described above.

As described above, in the antenna according to the sixth embodiment, the magnetic shield body is disposed above the coil unit, so that, even when the antenna is installed on the bottom of the vehicle, the influence of the metallic components of the vehicle body is suppressed, which makes it possible to efficiently transmit electric power.

In addition, in the antenna according to the sixth embodiment, the metallic body that covers the upper opening portion is provided, so that it is made possible to stably transmit electric power regardless of the type of the vehicle, on which the antenna is installed.

In the antenna according to the sixth embodiment, the metallic body includes the plurality of metallic pieces, so that it is made possible to more efficiently transmit electric power.

In the antenna according to the sixth embodiment, when the plurality of heat dissipation members that are not brought into contact with each other are disposed, it is made possible to efficiently dissipate the heat generated by the coil unit and at the same time efficiently transmit electric power.

Next, another embodiment of the invention will be described. FIG 19 is an exploded perspective view of a receiving antenna 201 according to a seventh embodiment of the invention. In the diagram in the right side of FIG. 19, a base 310 that forms the coil unit 270 is enlarged in the thickness direction. FIG. 20 is a schematic diagram of a section showing how electric power is transferred via the receiving antenna 201 according to the seventh embodiment of the invention. Note that although a rectangular flat plate-shaped one is taken as an example of a coil unit 270 in the following description of the embodiments, the coil of the antenna of the invention is not limited to the coil having such a shape. A circular flat plate-shaped one may be used as the coil unit 270.

Such a coil unit 270 functions as a magnetic resonance antenna portion in the receiving antenna 201. The "magnetic resonance antenna portion" includes not only the inductance component of the coil unit 270 but also a capacitance component of the stray capacitance of the coil unit 270 and/or the capacitance of the capacitor artificially added.

A case body 260 is used to accommodate the coil unit 270 of the receiving antenna 201 having the inductance component. The case body 260 is made of resin, such as polycarbonate, for example, and has a box shape having an opening.

A side plate portion 262 is provided so as to extend from each side of a rectangular bottom plate portion 261 of the case body 260 perpendicularly to the bottom plate portion 261. An upper opening portion 263 surrounded by the side plate portions 262 is formed at the upper side of the case body 260. Installation of the case body 260 on the vehicle body may be performed by a well-known method. Note that a flange member or the like may be provided around the upper opening portion 263 so as to increases the ease of installation onto the vehicle body.

The coil unit 270 includes the rectangular flat plate-shaped glass epoxy base 310 and electrically conductive portions formed on the upper surface and the lower surface of the base 310. More specifically, the base 310 has a first surface 311 as a major surface and a second surface 312 that is the back in relation to the first surface 311 and the spiral, electrically conductive portion is formed on each of the first surface 311 and the second surface 312, whereby the receiving antenna 201 is provided with the inductance component.

A spiral, first surface electrically conductive portion 330 is formed on the first surface 311 of the base 310, a first surface first end portion 331 is provided at the radially inner side of the first surface electrically conductive portion 330, and a first surface second end portion 332 is provided at the radially outer side of the first surface electrically conductive portion 330.

Similarly, a spiral, second surface electrically conductive portion 350 is formed on the second surface 312 of the base 310, a second surface first end portion 351 is provided at the radially inner side of the second surface electrically conductive portion 350, and a second surface second end portion 352 is provided at the radially outer side of the second surface electrically conductive portion 350.

The first surface electrically conductive portion 330 and the second surface electrically conductive portion 350 are configured so as to coincide with each other when viewed transparently from the first surface 311 side in the direction of the second surface 312. With such a configuration, it is facilitated to adjust or design the mutual inductance between the inductance component of the first surface electrically conductive portion 330 on the first surface 311 and the inductance component of the second surface electrically conductive portion 350 on the second surface 312,

In the base 310, a first through hole conducting portion 341 that penetrates between the first surface 311 and the second surface 312 allows the first surface first end portion 331 and the second surface first end portion 351 to be electrically connected to each other. In addition, a second through hole conducting portion 342 that penetrates between the first surface 311 and the second surface 312 allows the first surface second end portion 332 and the second surface second end portion 352 to be electrically connected to each other.

Conductive wires (not shown) are electrically connected to the first surface first end portion 331 positioned on the radially inner side of the spiral, first surface electrically conductive portion 330 and the first surface second end portion 332 positioned on the radially outer side thereof as described above. Thus, the electric power received by the receiving antenna 201 is conducted to the rectifier section 202. Such a coil unit 270 is placed on the rectangular bottom plate portion 261 of the case body 260 and is fixed to the bottom plate portion 261 by suitable fixing means.

The antenna according to the seventh embodiment as described above has the inductance component of the first surface electrically conductive portion 330 on the first surface 311, the inductance component of the second surface electrically conductive portion 350 on the second surface 312, and the mutual inductance between the first surface electrically conductive portion 330 and the second surface electrically conductive portion 350 that is formed so as to overlap the first surface electrically conductive portion 330, so that there is no significant reduction in the inductance and at the same time, the resistance of the electric circuit of the antenna is reduced because the first surface electrically conductive portion 330 and the second surface electrically conductive portion 350 are connected in parallel with each other. With the above configuration, the quality factor is improved and therefore, the transmission efficiency between the antennas is improved.

The magnetic shield body 280 is a flat plate-shaped magnetic member having a hole portion 285. A magnetic material, such as ferrite, can be used to make the magnetic shield body 280. The magnetic shield body 280 is fixed to the case body 260 by suitable fixing means so that the magnetic shield body 280 is disposed to form a space above the coil unit 270. Such a layout increases the proportion of the magnetic lines of force generated by the transmitting antenna 105 that pass through the magnetic shield body 280, so that the influence of the metallic components of the vehicle body on the magnetic lines of force exerted when electric power is transmitted from the transmitting antenna 105 to the receiving antenna 201, is reduced.

In the antenna according to the seventh embodiment, it is preferable that a hole portion 285 be formed in the flat plate-shaped magnetic shield body 280 disposed above the coil unit 270. When the hole portion 285 is formed in the magnetic shield body 280, loss in the magnetic shield body 280 itself is reduced and it is made possible to maximize the shielding effect of the magnetic shield body 280. In addition, in the case of the magnetic shield body 280 having the hole portion 285, the area of the member is small and it is made possible to reduce costs of the antenna. It is preferable that the area of the hole portion 285 be such that the overlap between magnetic shield body 280 and the electrically conducive portion 272 of the coil unit 270 when viewed along the layering direction is not reduced.

FIGS. 21A and 21B are graphs showing variation in the transmission efficiency as the positional deviation of the antenna varies. In FIGS. 21A and 21B, in the case of the seventh embodiment, the antenna according to the seventh embodiment is used as one of the transmission antenna 105 and the receiving antenna 201, whereas in the case of the first embodiment, the antenna, in which the first surface (one surface) only is provided with the electrically conductive portion in each of the transmission antenna 105 and the receiving antenna 201.

FIG. 21A is a graph showing variation in efficiency when the receiving antenna 201 (or the transmitting antenna 105) shifts, in the direction along the long side in the horizontal plane including the antenna, from a predetermined facing position, at which the transmitting antenna 105 and the receiving antenna 201 face each other. FIG 21B is a graph showing variation in efficiency when the receiving antenna 201 (or the transmitting antenna 105) shifts, in the direction along the short side in the horizontal plane including the antenna, from the predetermined facing position, at which the transmitting antenna 105 and the receiving antenna 201 face each other. As shown in the right side diagram of FIG. 19, the long side and the short side are determined based on the length of the side of the rectangular base 310. FIGS. 21A and 21B are drawn based on the results of measurement conducted using a vector network analyzer (VNA).

As shown in FIGS. 21A and 21B, it can be understood that in either case, the transmission efficiency when electric power is transmitted using the antenna according to the seventh embodiment is higher than that when electric power is transmitted using the antenna according the first embodiment.

Table 1 is a characteristics table of the characteristics of the antenna according to the seventh embodiment and the antenna according to the first embodiment. In this table, the characteristics of the antenna itself are listed in the upper side and the characteristics when electric power is transmitted are listed in the lower side.

Table 1

| | | Antenna according to seventh embodiment | Antenna according to first embodiment |
|---|---|---|---|
| Characteristics of antenna itself | R [Ω] | 1.28 | 1.39 |
| | L [H] | $1.35 \times 10^{-4}$ | $1.37 \times 10^{-4}$ |
| | C [F] | $9.72 \times 10^{-10}$ | $9.73 \times 10^{-10}$ |
| | Q | 291.15 | 269.95 |
| Characteristics when electric power is transmitted | First resonance frequency [Hz] | $4.120 \times 10^{5}$ | $4.094 \times 10^{5}$ |
| | Second resonance frequency [Hz] | $4.716 \times 10^{5}$ | $4.684 \times 10^{5}$ |
| | Coupling coefficient K | 0.135 | 0.134 |
| | KQ | 39.28 | 36.29 |
| | α | 1542.73 | 1316.89 |
| | Efficiency η [%] | 95.04 | 94.64 |

In this table, a and efficiency η have the relation expressed by the following expression (1).

$$\eta = \frac{1}{1 + \frac{2(1+\sqrt{1+\alpha})}{\alpha}} \quad \ldots (1)$$

wherein a equals to $k^2 * Q1 * Q2$ when the Q factors of the transmitting antenna and the receiving antenna are Q1 and Q2, respectively. When the transmitting antenna and the receiving antenna have substantially the same characteristics, that is, when it can be assumed that $Q1 \simeq Q2 = Q$, $\alpha$ is defined as $(kQ)^2$.

It can be understood that in the antenna according to the seventh embodiment, the characteristic, Q, of the antenna itself is improved because of reduction in R. In addition, in the antenna according to the seventh embodiment, increase in the inductance (mutual inductance) that is brought about by combination of the inductance of the first surface electrically conductive portion 330 and the inductance of the second surface electrically conductive portion 350 that are provided on the surfaces of the base 310 suppresses reduction in the inductance in the whole of the antenna to 2μH (approximately 1.5 percent of the total inductance). From the face described above, it can be understood that the antenna according to the seventh embodiment has an advantage in terms of the antenna performance (efficiency).

As described above, the antenna according to the seventh embodiment is configured so that the first surface electrically conductive portion 330 and the second surface electrically conductive portion 350 formed so as to overlap the first surface electrically conductive portion 330 are electrically connected via through holes at the two end portions. With the antenna according to the seventh embodiment configured as described above, the transmission efficiency between antennas is improved because the resistance is reduced and the Q (quality factor) is improved without significantly reducing the inductance.

Next, an eighth embodiment of the invention will be described. The eighth embodiment differs from the seventh embodiment in that the seventh embodiment is configured so that the electrically conductive portions of the coil unit 270 are provided on the surfaces of the base 310, whereas the electrically conductive portion of the coil unit 270 is also provided at an intermediate layer of the base 310 in the eighth embodiment. Next, the configuration of the coil unit 270, which is the difference, will be described.

FIG. 22 is an exploded perspective view of a receiving antenna 201 according to the eighth embodiment of the invention. In the diagram in the right side of FIG. 22, a base 310 that forms the coil unit 270 is enlarged in the thickness direction.

The coil unit 270 includes the rectangular flat plate-shaped glass epoxy base 310 and electrically conductive portions formed on the upper surface and the lower surface of the base 310, and at the intermediate layer of the base 310. More specifically, the base 310 has a first surface 311 as a major surface, a second surface 312 that is the back in relation to the first surface 311, and the intermediate layer 313 between the first surface 311 and the second surface 312, and the spiral, electrically conductive portion is formed on each of the first surface 311 and the second surface 312, and at the intermediate layer 313, whereby the receiving antenna 201 is provided with the inductance component.

A spiral, first surface electrically conductive portion 330 is formed on the first surface 311 of the base 310, a first surface first end portion 331 is provided at the radially inner side of the first surface electrically conductive portion 330, and a first surface second end portion 332 is provided at the radially outer side of the first surface electrically conductive portion 330.

Similarly, a spiral, intermediate layer electrically conductive portion 360 is formed at the intermediate layer 313 of the base 310, an intermediate layer first end portion 361 is provided at the radially inner side of the intermediate layer electrically conductive portion 360, and an intermediate layer second end portion 362 is provided at the radially outer side of the intermediate layer electrically conductive portion 360.

Similarly, a spiral, second surface electrically conductive portion 350 is formed on the second surface 312 of the base 310, a second surface first end portion 351 is provided at the radially inner side of the second surface electrically conductive portion 350, and a second surface second end portion 352 is provided at the radially outer side of the second surface electrically conductive portion 350.

The first surface electrically conductive portion 330, the intermediate layer electrically conductive portion 360, and the second surface electrically conductive portion 350 are configured so as to coincide with each other when viewed transparently from the first surface 311 side in the direction of the second surface 312. With such a configuration, it is facilitated to adjust or design the mutual inductance of the inductance component of the first surface electrically conductive portion 330 on the first surface 311, the inductance component of the intermediate layer electrically conductive portion 360 at the intermediate layer 313, and the inductance component of the second surface electrically conductive portion 350 on the second surface 312.

In the base 310, a first through hole conducting portion 341 that penetrates between the first surface 311 and the intermediate layer 313 allows the first surface first end portion 331 and the intermediate layer first end portion 361 to be electrically connected to each other. In addition, a second through hole conducting portion 342 that penetrates between the first surface 311 and the intermediate layer 313 allows the first surface second end portion 332 and the intermediate layer second end portion 362 to be electrically connected to each other.

In addition, a third through hole conducting portion 343 that penetrates between the intermediate layer 313 and the second surface 312 allows the intermediate layer first end portion 361 and the second surface first end portion 351 to be electrically connected to each other. In addition, a fourth through hole conducting portion 344 that penetrates between the intermediate layer 313 and the second surface 312 allows the intermediate layer second end portion 362 and the second surface second end portion 352 to be electrically connected to each other.

Also in the eighth embodiment having the coil unit 270 configured as described above, it is possible to enjoy the effects similar to those of the above seventh embodiment. Although in the eighth embodiment, the electrically conductive portions are formed on the first and second surfaces 311 and 312 and at the intermediate layer 313 and each pair of ends of the electrically conductive portions is electrically connected through the through hole conducting portion that penetrates the base, a configuration may be employed, in which two or more intermediate layers are provided and the number of layers for providing the electrically conductive portions is equal to or greater than four.

Although an example, in which a glass epoxy board is used as the base 310, has been described in the description of the eighth embodiment, a highly heat dissipative ceramic base may be used or alternatively, a base, in which an insulation film is formed on a metallic base, such as an aluminum base, may be used. Needless to say, one using a flexible printed board or the like may be used as the base.

An embodiment obtained by combining a feature included in the first to sixth embodiments to the seventh embodiment or the eight embodiment is also within the scope of the invention. For example, in either of the seventh embodiment and the eighth embodiment, a plurality of the heat dissipation members 300 may be attached to the side plate portions 262 as in the case of the second embodiment.

As described above, the antennas according to the seventh and eighth embodiments are configured so that at least the first surface electrically conductive portion and the second surface electrically conductive portion formed so as to overlap the first surface electrically conductive portion are electrically connected via through holes at the two end portions. With the antenna configured as described above, the transmission efficiency between antennas is improved because the resistance is reduced and the Q (quality factor) is improved without significantly reducing the inductance.

An antenna (201) includes: a case body (260) having a bottom plate portion (261), side plate portions (262) extending from the bottom plate portion (261), and an opening portion (263) surrounded by the side plate portions (262); a magnetic resonance antenna portion (270) placed in the case body (260); and a magnetic shield body (280) disposed on a side closer to the opening portion (263) than the magnetic resonance antenna portion (270).

## Claims

**1.** An antenna (201) **characterized by** comprising:

a case body (260) including a bottom plate portion (261), side plate portions (262) extending from the bottom plate portion (261), and an opening portion (263) surrounded by the side plate portions (262);
a magnetic resonance antenna portion (270) placed in the case body (260); and
a magnetic shield body (280) disposed on a side closer to the opening portion (263) than the magnetic resonance antenna portion (270).

**2.** The antenna according to claim 1, wherein the side closer to the opening portion (263) than the magnetic resonance antenna portion (270) is an upper side with respect to the magnetic resonance antenna portion (270), and the antenna is configured to be attached to a vehicle bottom portion at the opening portion (263).

**3.** The antenna according to claim 1, wherein the opening portion (263) is disposed under the magnetic resonance antenna portion (270), and the side closer to the opening portion (263) than the magnetic resonance antenna portion (270) is a lower side with respect to the magnetic resonance antenna portion (270).

**4.** The antenna according to any one of claims 1 to 3, further comprising a metallic body (290) that covers the case body (260) at an upper side of the case body (260).

**5.** An antenna **characterized by** comprising:

a case body (260) including a bottom plate portion (261) and side plate portions (262) extending from the bottom plate portion (261);
a coil unit (270) placed in the case body (260);
a flat plate-shaped magnetic shield body (280) that is disposed above the coil unit (270) and has a hole portion (285); and
a metallic body (290) that covers the case body (260) at an upper side of the case body (260).

**6.** An antenna **characterized by** comprising:

a case body (260) including a bottom plate portion (261), side plate portions (262) extending from the bottom plate portion (261), and an upper opening portion (263) surrounded by the side plate portions (262);
a coil unit (270) placed in the case body (260); and
a magnetic shield body (280) that is disposed above the coil unit (270) and includes a plurality of magnetic shield pieces (282).

**7.** The antenna according to claim 6, further comprising a metallic body (290) that covers the case body (260) at an upper side of the case body (260).

**8.** An antenna **characterized by** comprising:

a case body (260) including a bottom plate portion (261) and side plate portions (262) extending from the bottom plate portion (261);
a magnetic resonance antenna portion (270) placed in the case body (260); and
a magnetic shield body (280) that is disposed above the magnetic resonance antenna portion (270) so as to be spaced apart from the magnetic resonance antenna portion (270) by a first distance ($d_1$).

**9.** The antenna according to claim 8, further comprising a metallic body (290) that is disposed above the magnetic shield body (280) so as to be spaced apart from the magnetic shield body (280) by a second distance ($d_2$).

**10.** The antenna according to claim 9, wherein the first distance ($d_1$) is greater than the second distance ($d_2$).

**11.** The antenna according to any one of claims 4, 5, 7, 9, and 10, wherein the metallic body (290) includes a plurality of metallic pieces (292).

**12.** The antenna according to any one of claims 1 to 11, wherein a plurality of heat dissipation members (300) that are not brought into contact with each other are disposed on the side plate portions (262).

**13.** The antenna according to any one of claims 1 to 12, wherein a Q factor is equal to or greater than 100.

**14.** An antenna **characterized by** comprising:

a base (310) that has a first surface (311) and a second surface (312) that is a back in relation to the first surface (311);
a first surface electrically conductive portion (330) that is formed on the first surface (311) of the base (310) and, two end of which are a first surface first end portion (331) and a first surface second end portion (332);
a second surface electrically conductive portion (350) that is formed on the second surface (312) of the base (310) and, two end of which are a second surface first end portion (351) and a second surface second end portion (352), wherein the second surface electrically conductive portion (350) coincides with the first surface electrically conductive portion (330) when viewed transparently from the first surface side in a direction of the second surface (312);
a first through hole conducting portion (341) that penetrates between the first surface (311) and the second surface (312) allows the first surface first end portion (331) and the second surface first end portion (351) to be electrically connected to each other; and
a second through hole conducting portion (342) that penetrates between the first surface (311) and the second surface (312) allows the first surface second end portion (332) and the second surface second end portion (352) to be electrically connected to each other.

**15.** An antenna **characterized by** comprising:

a plurality of electrically conductive portions (330, 350, 360) that are layered with a base (310) interposed between the adjacent electrically conductive portions, each electrically conductive portion having a first end portion (331, 351, 361) and a second end portion (332, 352, 362);
a through hole conducting portion (341, 343) that penetrates the base (310) and allows the first end portions (331, 351, 361) of the electrically conductive portions (330, 350, 360) to be electrically connected to each other; and
a through hole conducting portion (342, 344) that penetrates the base (310) and allows the second end portions (332, 352, 362) of the electrically conductive portions (330, 350, 360) to be electrically connected to each other, wherein all of the plurality of electrically conductive portions (330, 350, 360) coincide with each other when viewed transparently along a layering direction.

FIG. 1

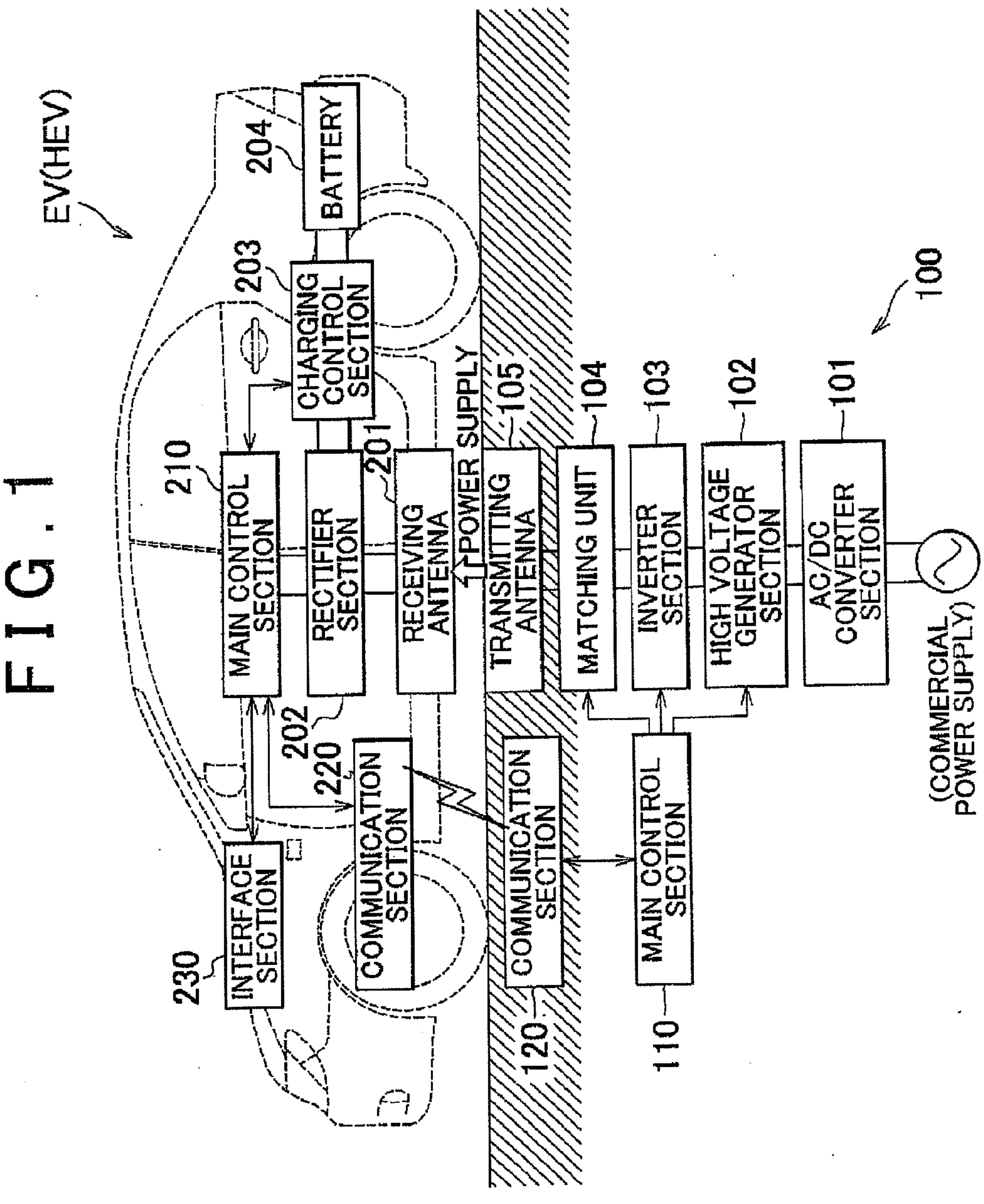
EV(HEV)
204
BATTERY
203
CHARGING CONTROL SECTION
210
MAIN CONTROL SECTION
202
RECTIFIER SECTION
201
RECEIVING ANTENNA
POWER SUPPLY
105
TRANSMITTING ANTENNA
104
MATCHING UNIT
103
INVERTER SECTION
102
HIGH VOLTAGE GENERATOR SECTION
101
AC/DC CONVERTER SECTION
100
(COMMERCIAL POWER SUPPLY)
220
COMMUNICATION SECTION
230
INTERFACE SECTION
120
COMMUNICATION SECTION
110
MAIN CONTROL SECTION

FIG. 2

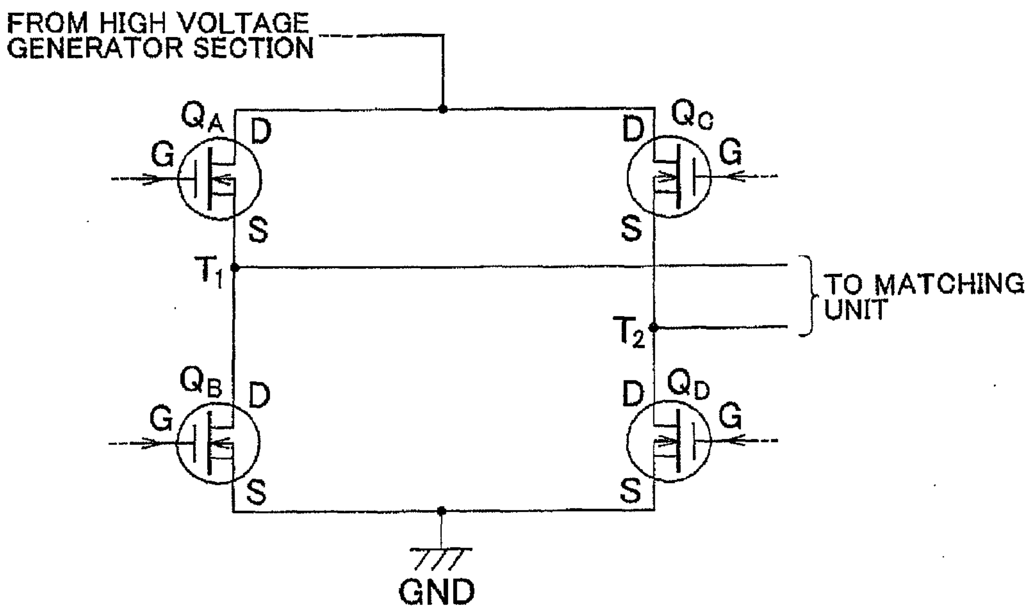
FROM HIGH VOLTAGE
GENERATOR SECTION
QA
D
G
S
QC
D
G
S
T1
T2
TO MATCHING
UNIT
QB
D
G
S
QD
D
G
S
GND

FIG. 3

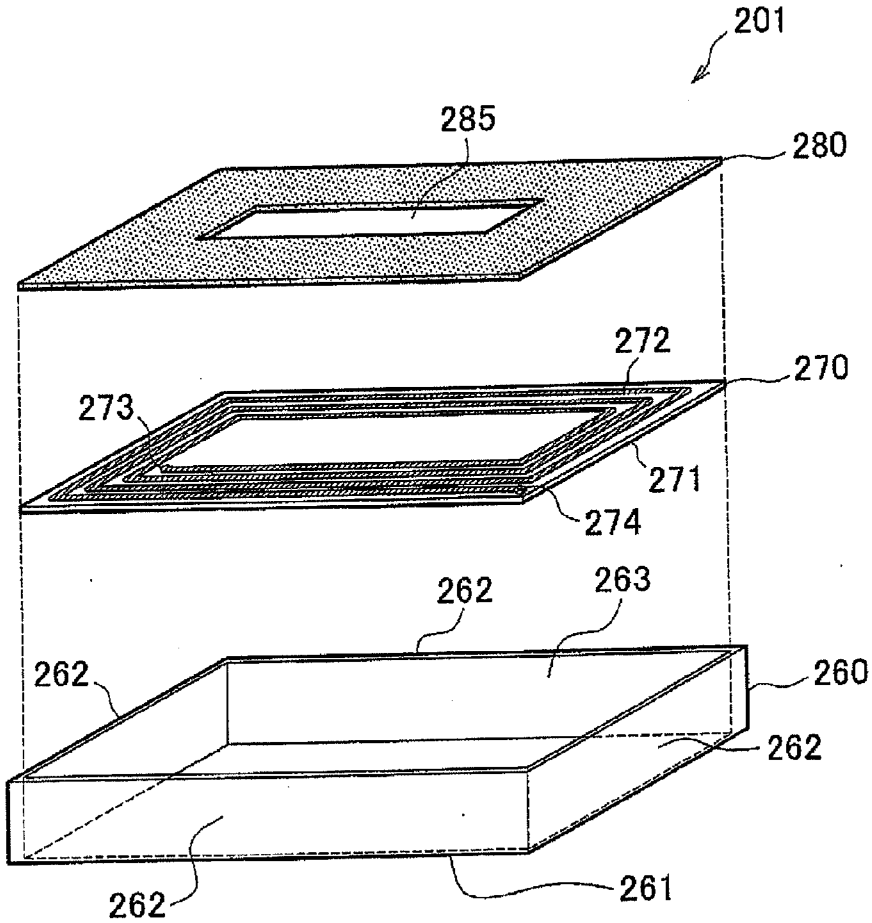

FIG. 4

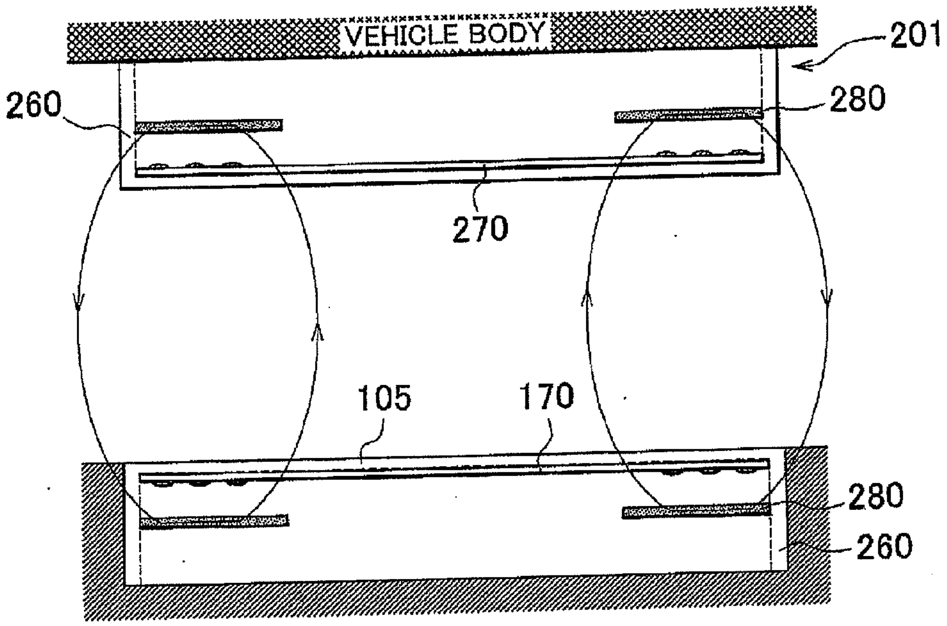
VEHICLE BODY
201
260
280
270
105
170
280
260

FIG. 5

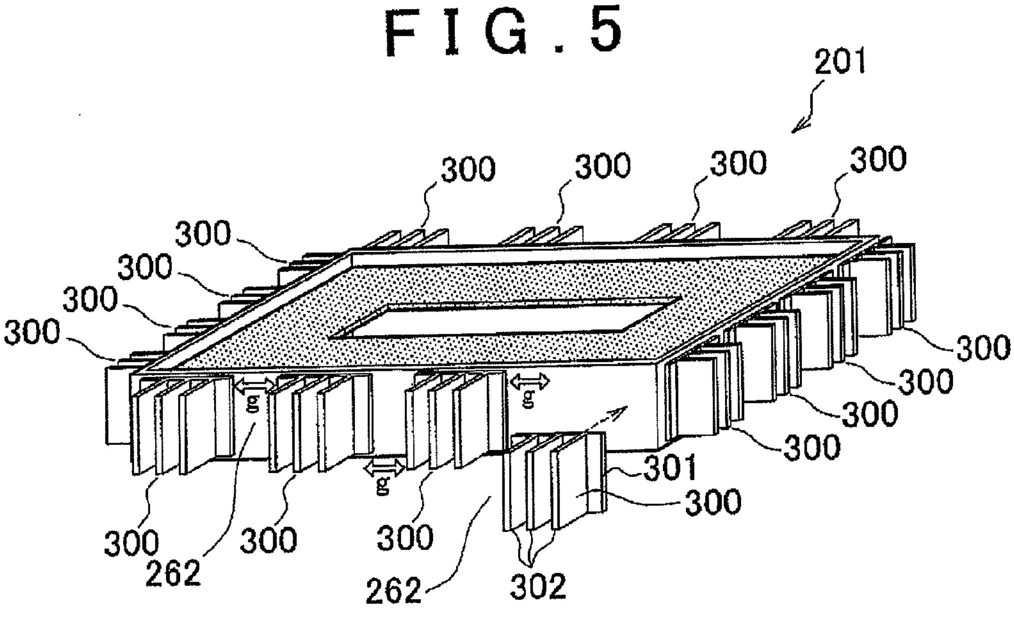
201
300
g
301
262
302

FIG.6A

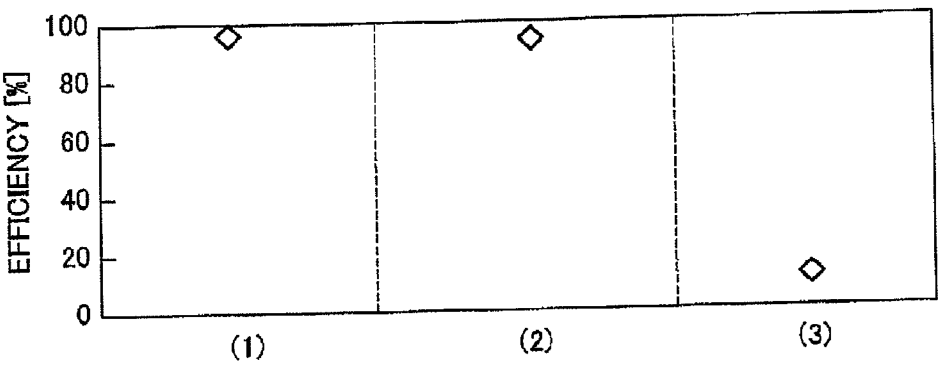


FIG.6B

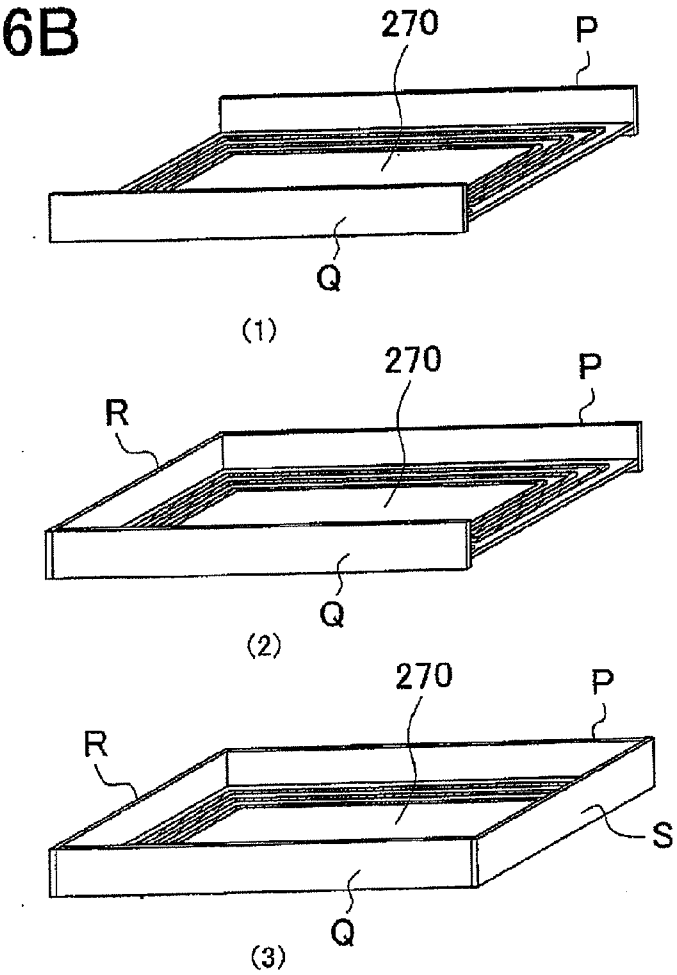

FIG. 7

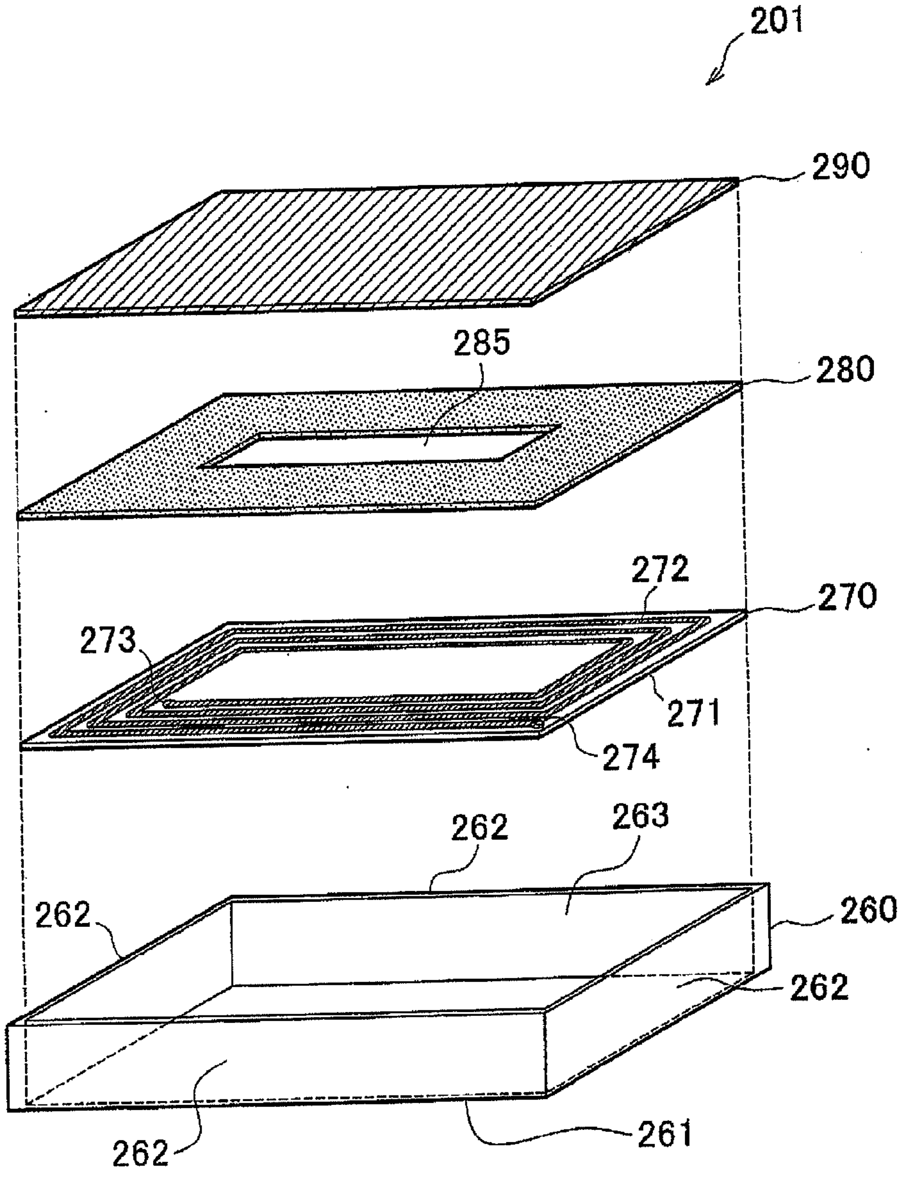

# FIG. 8

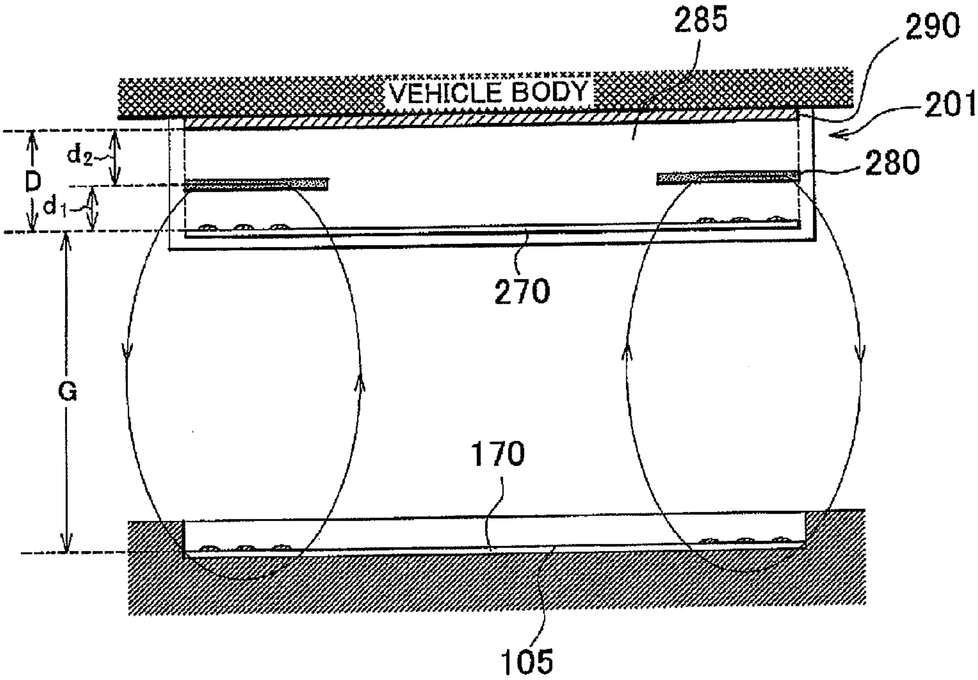

285
290
VEHICLE BODY
201
280
d2
D
d1
270
G
170
105


# FIG. 9

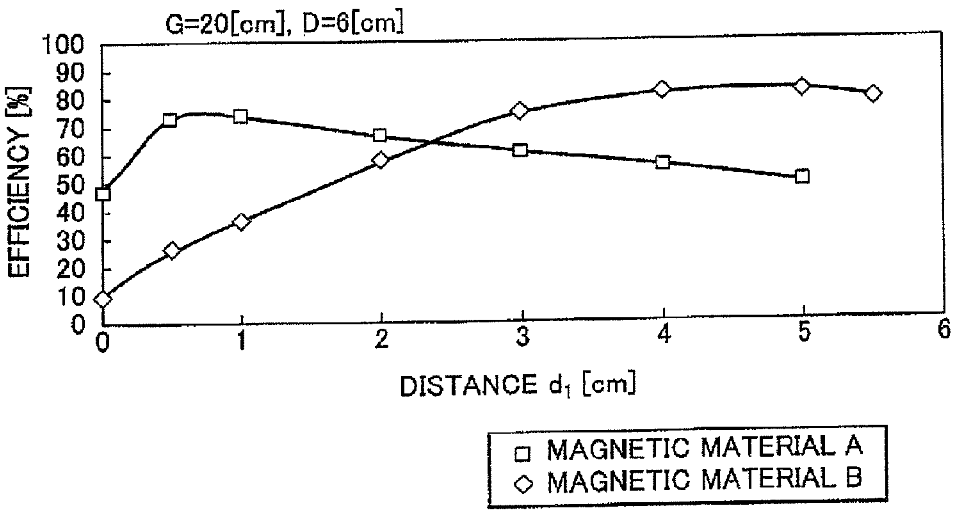

G=20[cm], D=6[cm]
100
90
80
70
60
50
40
30
20
10
0
EFFICIENCY [%]
0
1
2
3
4
5
6
DISTANCE d1 [cm]
□ MAGNETIC MATERIAL A
◇ MAGNETIC MATERIAL B

FIG. 10A

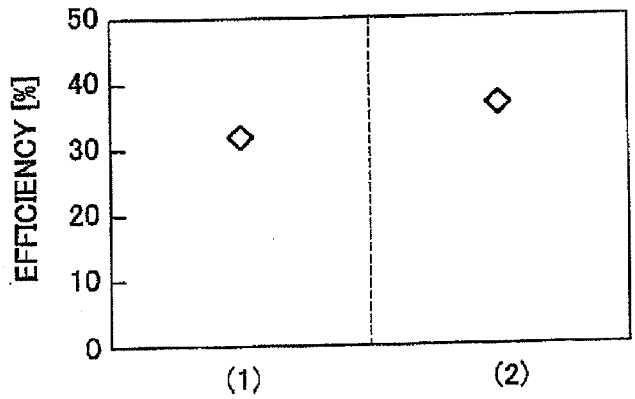


FIG. 10B

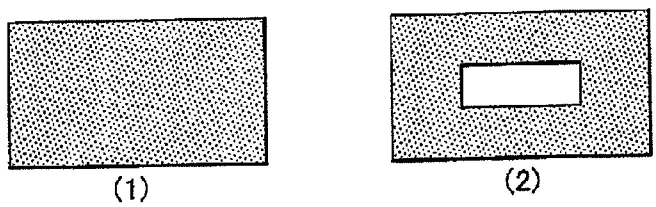

FIG. 11

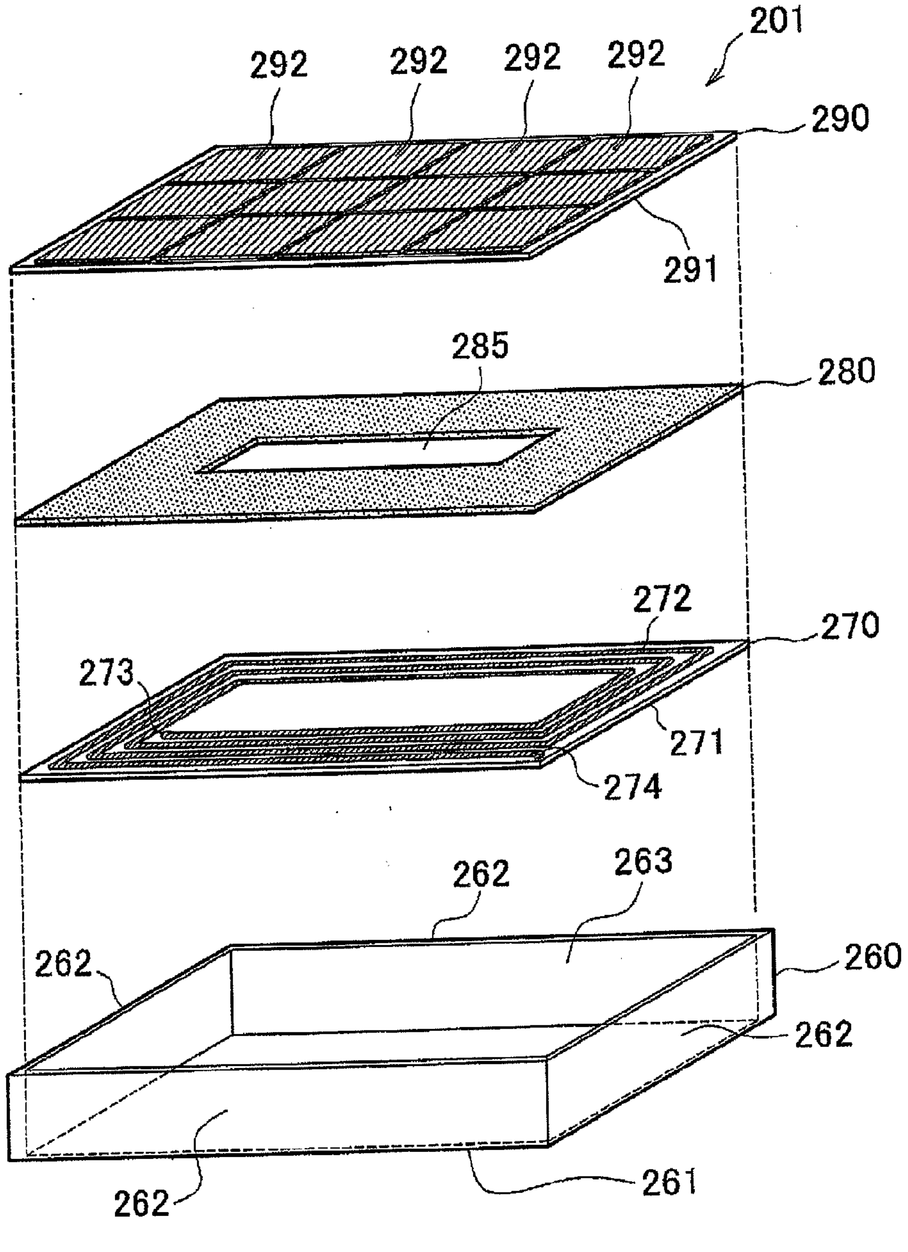
201
292
292
292
292
290
291
285
280
272
270
273
271
274
262
263
262
260
262
262
261

FIG. 12

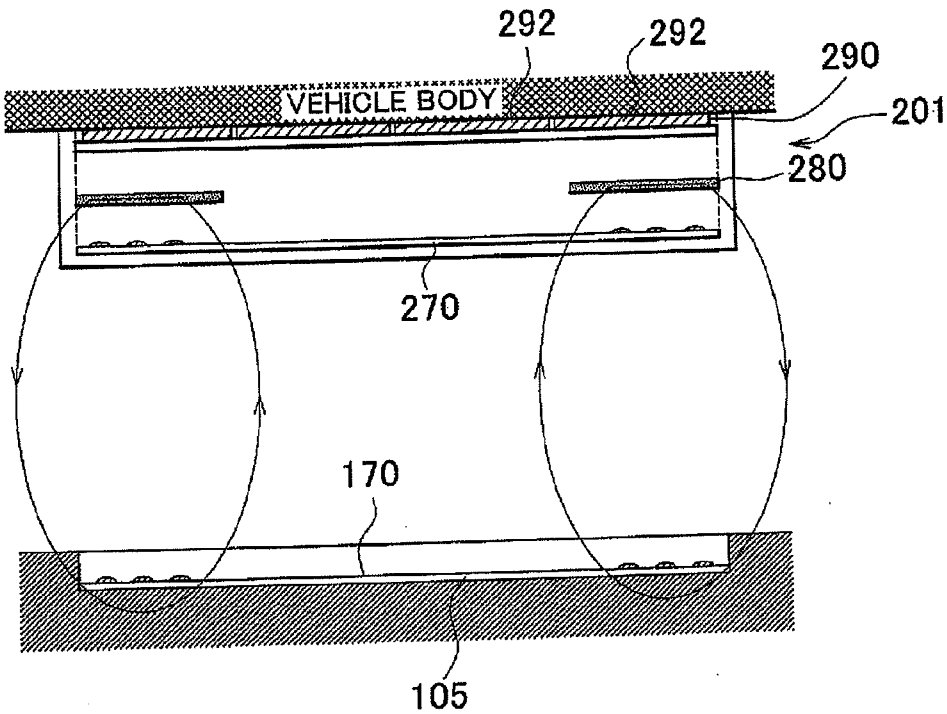

FIG. 13A

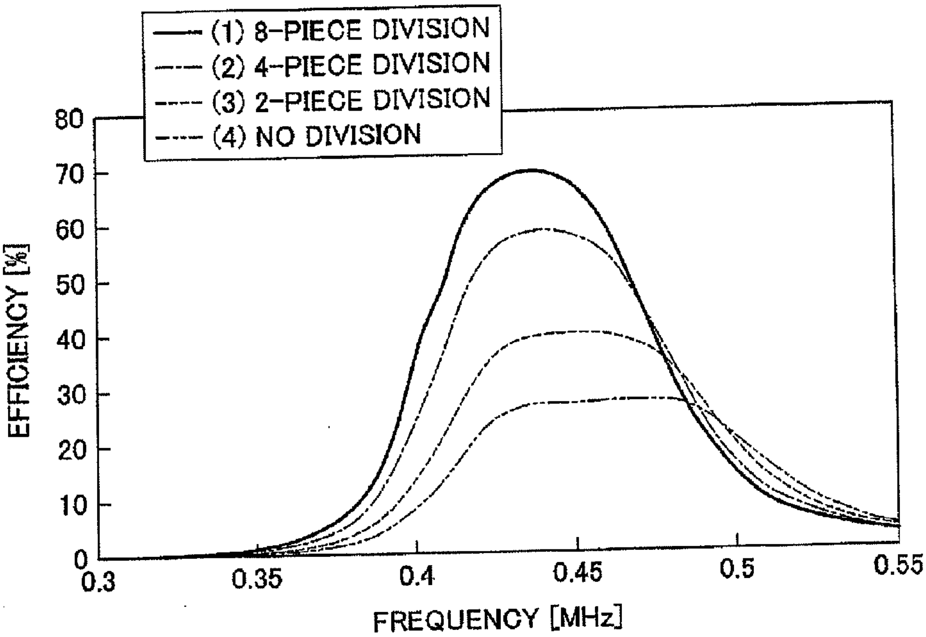


FIG. 13B

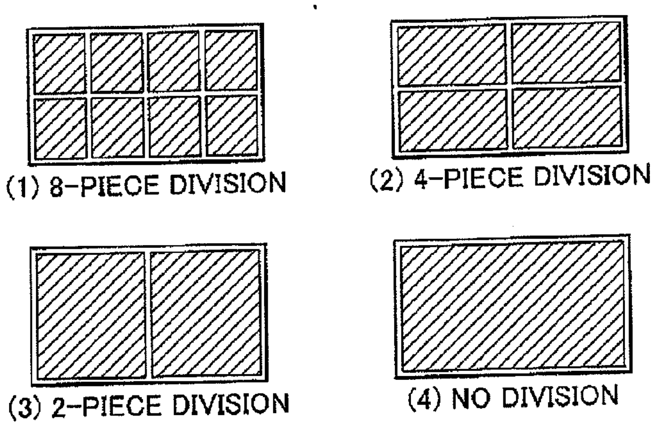

FIG. 14

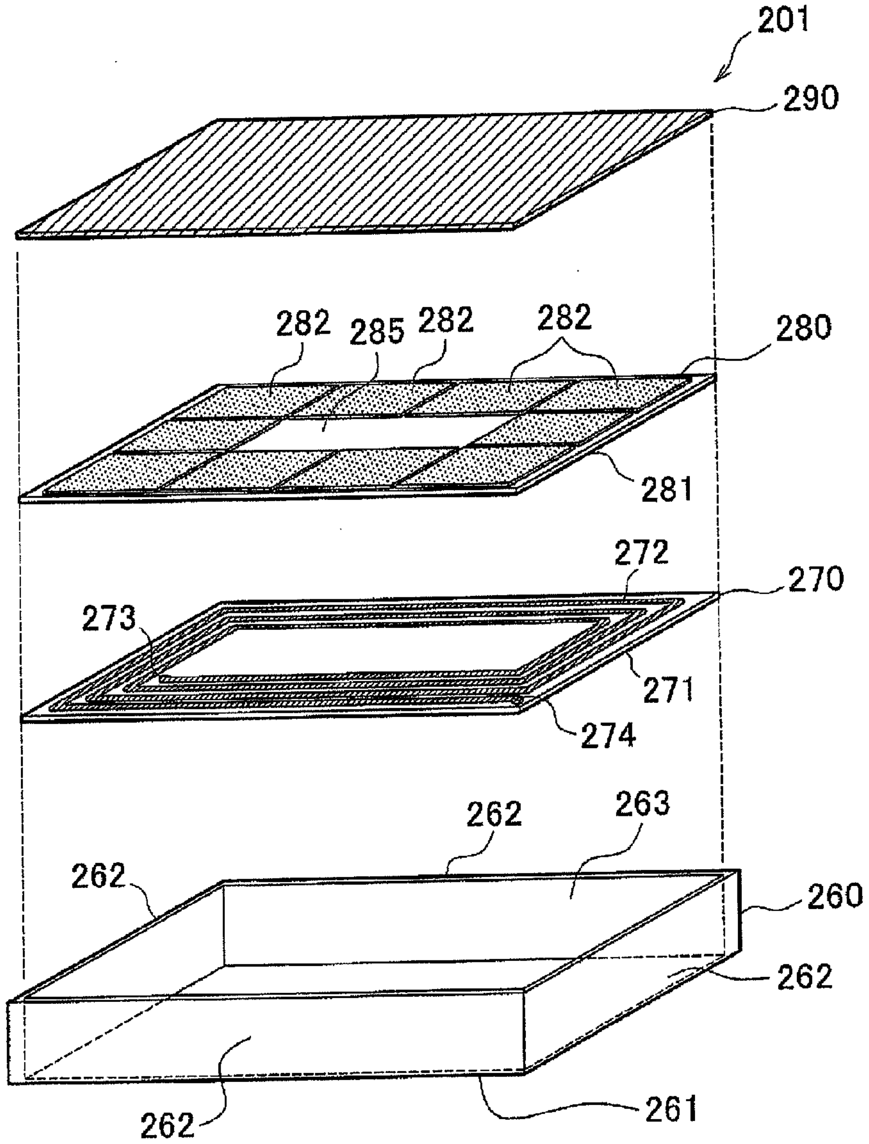
201
290
282
285
282
282
280
281
272
270
273
271
274
262
263
262
260
262
262
261

FIG. 15

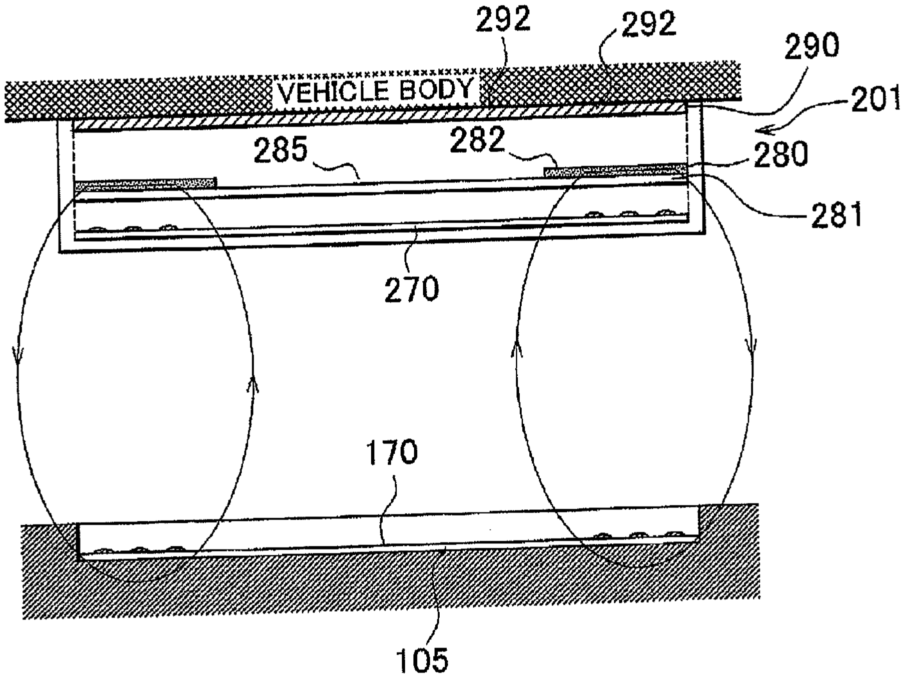


FIG. 16A

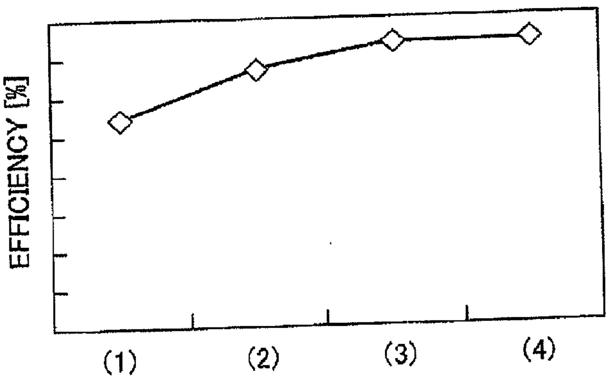


FIG. 16B

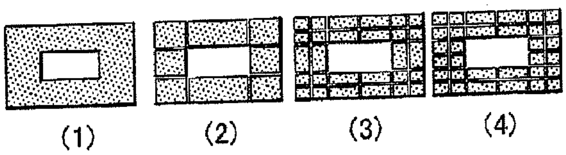

FIG. 17

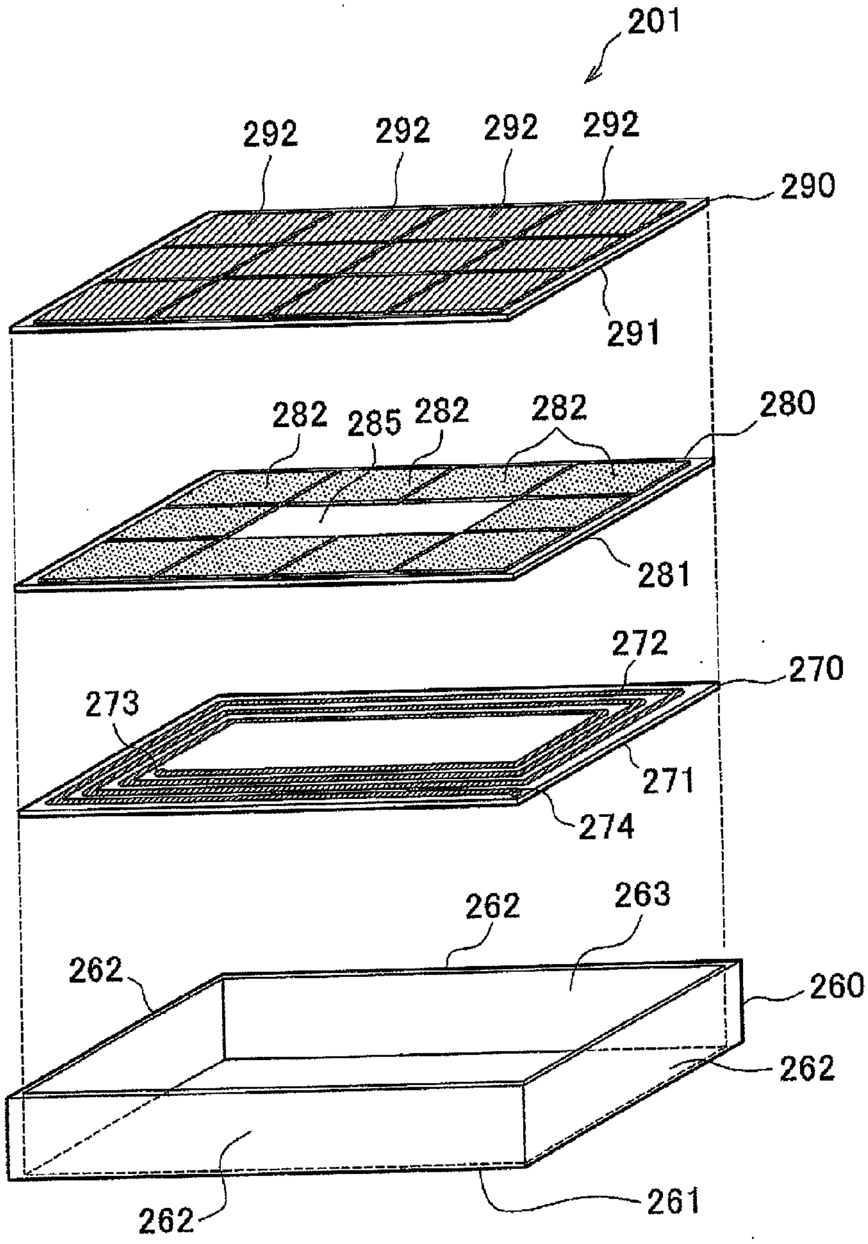
201
292
292
292
292
290
291
282
285
282
282
280
281
272
270
273
271
274
262
263
262
260
262
262
261

FIG. 18

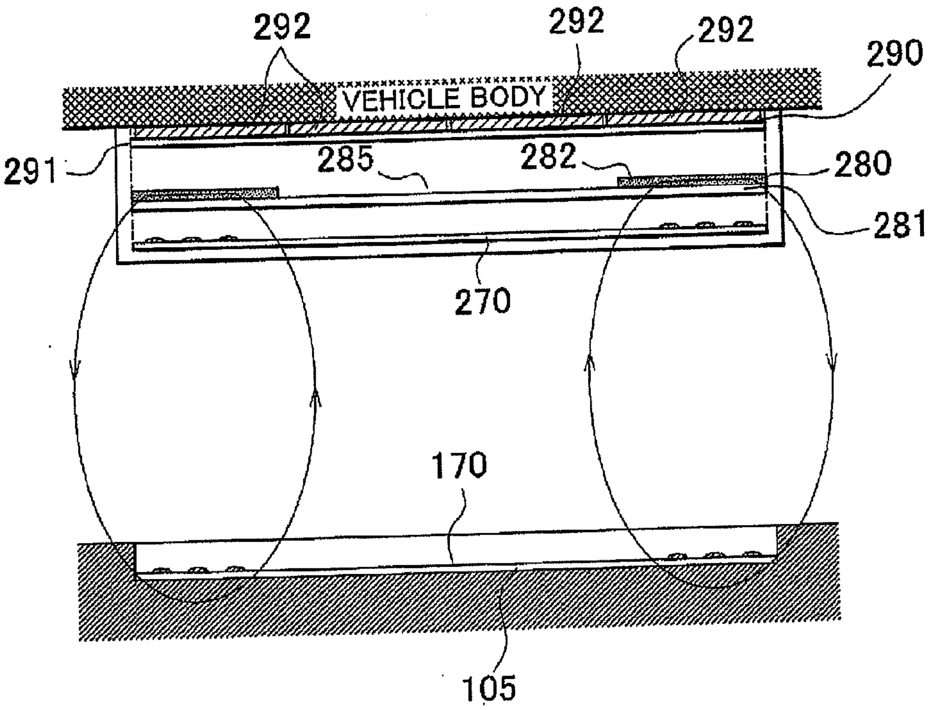

FIG. 19

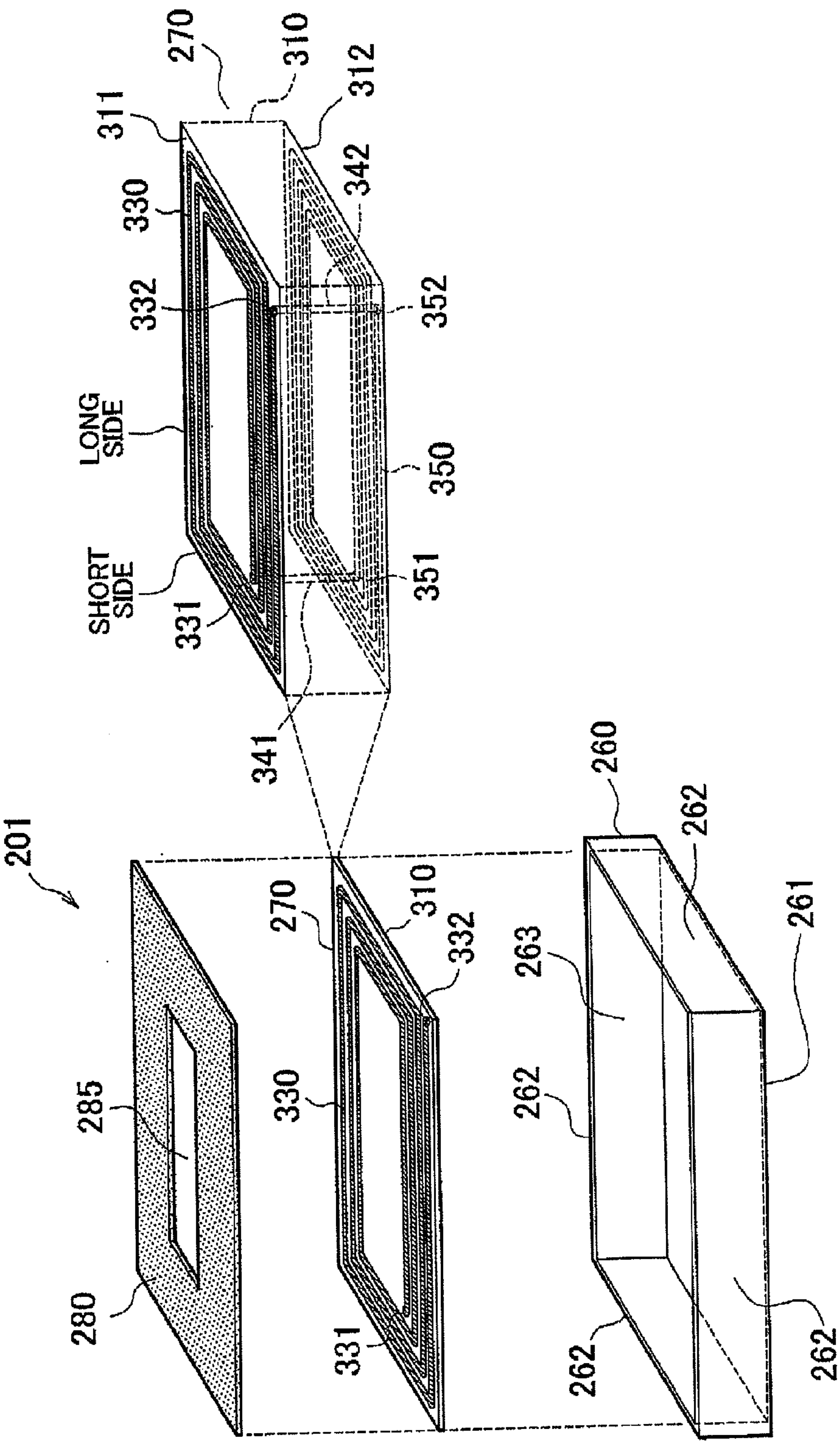
201
270
310
311
312
330
332
342
352
LONG SIDE
350
SHORT SIDE
331
351
341
260
262
263
261
280
285

FIG. 20

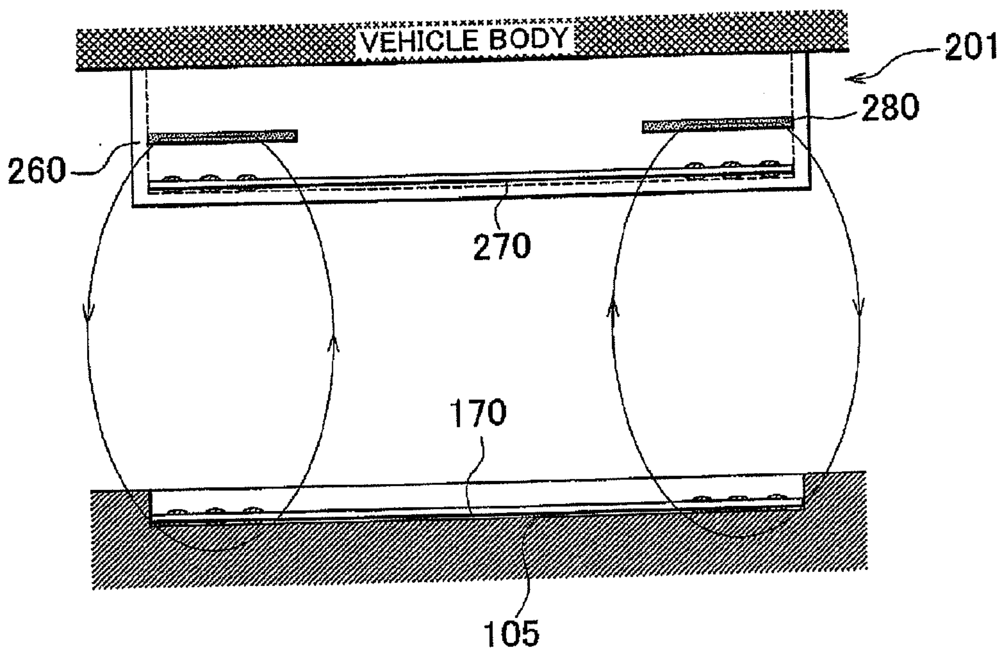

FIG. 21A

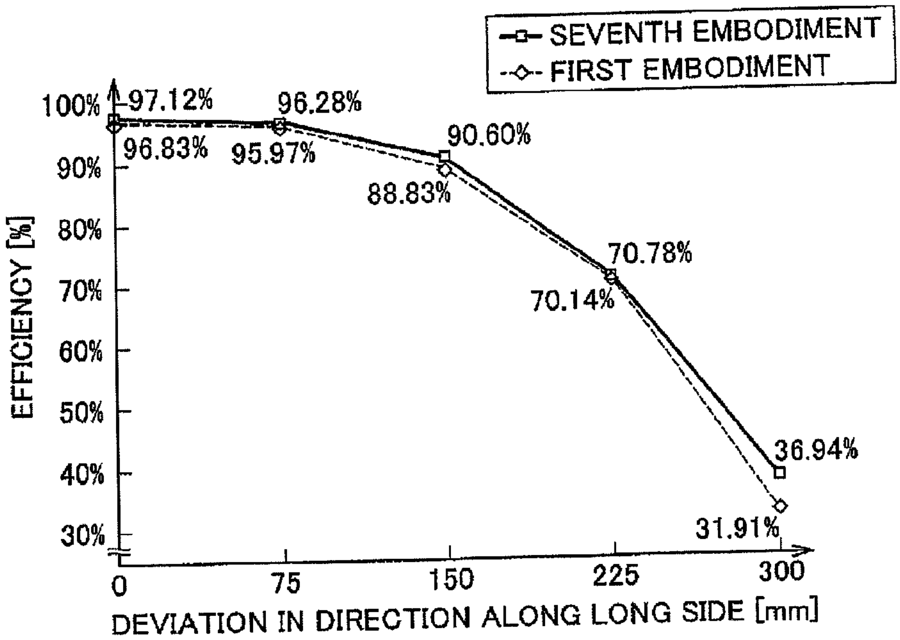


FIG. 21B

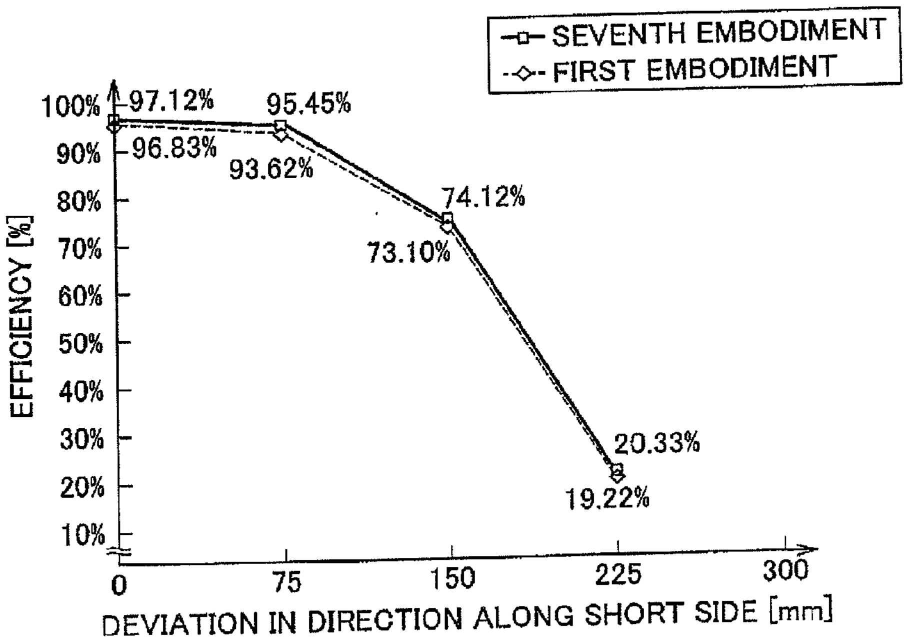

FIG. 22

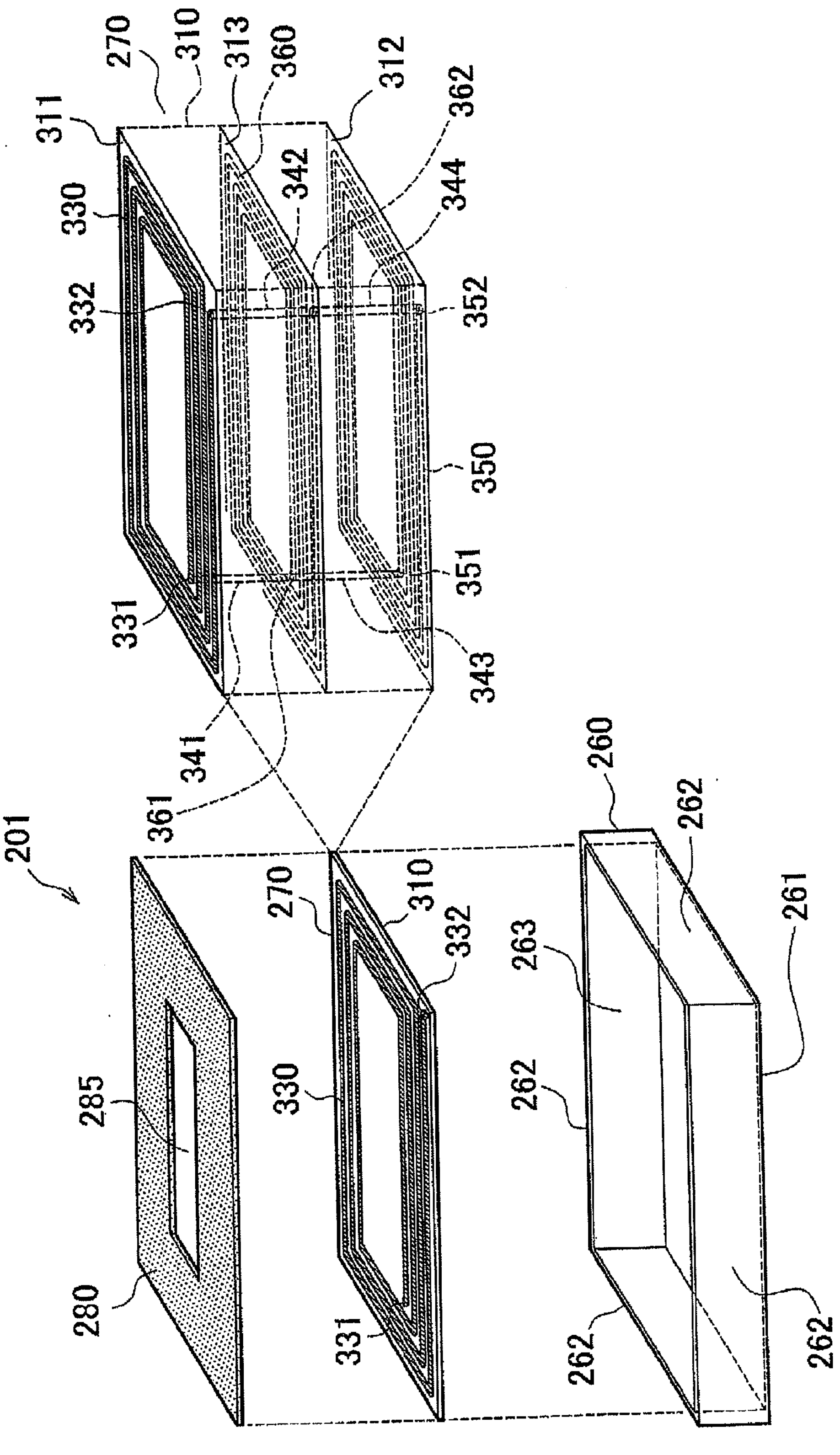
201
270
310
313
360
312
362
311
342
344
330
332
352
350
331
351
343
341
361
260
262
270
310
332
263
261
285
330
262
280
331
262
262

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2009501510 A
- JP 2010073976 A